# EUROPEAN PATENT APPLICATION

(11) **EP 1 276 308 A2**
(43) Date of publication of application: **15.01.2003**
(21) Application number: 02006670.0
(22) Date of filing: 26.03.2002
(51) Int. Cl.: H04N 1/00, H04N 101/00

(54) **Mobile communication terminal comprising camera**

(30) Priority: 12.07.2001 JP 2001212717; 14.09.2001 JP 2001280709; 14.02.2002 JP 2002037326
(71) Applicant: Kabushiki Kaisha Toshiba, Tokyo (JP)
(72) Inventor: Nishimura, Satoshi, Kabushiki Kaisha Toshiba, Minato-ku, Tokyo 105-8001 (JP); Aotake, Yusuke, Kabushiki Kaisha Toshiba, Minato-ku, Tokyo 105-8001 (JP); Tanaka, Takehiko, Kabushiki Kaisha Toshiba, Minato-ku, Tokyo 105-8001 (JP); Umemoto, Yuji, Kabushiki Kaisha Toshiba, Minato-ku, Tokyo 105-8001 (JP)
(74) Representative: HOFFMANN - EITLE

(57) **Abstract**

There is comprised an electronic flash unit (FU) having a light emitting section (31). A request for implementing control accompanying radio communication is monitored while a request for applying a charging voltage or a light-emission drive current to the electronic flash unit (FU) is monitored. The radio communication or the application of the charging voltage or light-emission drive current, or both are controlled on the basis of the results of monitoring, to prevent the radio communication and the application of the charging voltage from overlapping in time.

## Description

The present invention relates to a mobile communication terminal such as a mobile telephone or PDA (Personal Digital Assistants). More particularly, the invention relates to the mobile communication terminal having a camera.

In recent years, more and more mobile communication terminals such as mobile telephones and PDAs have come into use. A mobile communication terminal, which functions as a camera, too, has been recently developed. This mobile communication terminal has a camera provided at an upper part of the housing or on the back thereof. The camera incorporates a solid-state imaging element and a memory. The imaging element may be a CCD (Charge Coupled Device) or a CMOS (Complementary Metal Oxide Semiconductor). The data representing any still picture or any moving picture, photographed by the camera, is recorded in the memory. Alternatively, the data is transmitted to the terminal of a user who is the other party of communication. The mobile communication terminal can transmit image data representing the user's portrait, the surrounding scenery, a brochure, a picture, a catalog, and the like, to the terminal of the user who is the other party of the communication. In view of this, the mobile communication terminal is very useful.

Generally, cameras comprises but a limited number of components and have but a limited photosensitivity, because they should not be too large and their prices should not be too high. A camera can hardly provide pictures of desired quality when it is used at night or in dark rooms.

In view of the foregoing, the object of the invention is to provide a mobile communication terminal that can provide high quality pictures even if it is used at night or in dark rooms.

To attain the object, a mobile communication terminal according to an aspect of this invention comprises an electronic flash unit having a light emitting section. In the mobile communication terminal, a request for the control involving radio communication is monitored, and a request for the applying of a charging voltage or a light-emission drive current to the electronic flash unit is monitored. On the basis of the monitored results, the radio communication or the application of the voltage or current, or both are controlled, preventing the radio communication and the application of the voltage or current from overlapping in time.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a front view showing the exterior of a mobile communication terminal according to a first embodiment of the present invention;
FIG. 2 is a block diagram illustrating the circuit structure of the mobile communication terminal according shown in FIG. 1;
FIG. 3 is a block diagram of the main section of the mobile communication terminal shown in FIG. 2;
FIG. 4 is a flowchart explaining a procedure of distinguishing processes of a flash unit;
FIG. 5A is a sectional view depicting an earphone jack that is used as a connector in the communication terminal shown in FIGS. 1 and 2;
FIG. 5B is a side view showing a flash unit plug used as the connector in the terminal shown in FIGS. 1 and 2;
FIG. 6 is a diagram showing the circuit incorporated in the earphone jack shown in FIG. 5A;
FIG. 7 is a flowchart explaining the basic method of controlling the terminal shown in FIG. 2;
FIG. 8 is a flowchart representing the method of controlling the terminal of FIG. 2 while the terminal is operating in the camera mode;
FIG. 9 is a flowchart showing the method of controlling the terminal of FIG. 2 while the terminal is operating in the flash mode;
FIG. 10 is a front view depicting the exterior of a mobile communication terminal according to a second embodiment of this invention;
FIG. 11 is a block diagram showing the circuit provided in the terminal shown in FIG. 10;
FIG. 12 is a flowchart showing the method of controlling the mode setting in the terminal illustrated in FIG. 11;
FIG. 13 is a flowchart explaining how the mobile communication terminal shown of FIG. 11 operates in the camera mode;
FIG. 14 is a flowchart explaining how the mobile communication terminal of FIG. 11 operates in the flash mode;
FIG. 15 is a block diagram depicting the circuit built in a mobile communication terminal according to a third embodiment of the present invention;
FIG. 16 is a flowchart explaining the how the terminal shown in FIG. 15 operates in the still-picture taking mode;
FIG. 17 is a flowchart explaining how the terminal shown in FIG. 15 operates in the moving-picture taking mode;
FIG. 18 is a timing chart for explaining how the terminal operates in the still-picture taking mode;
FIG. 19 is a timing diagram for explaining how the terminal operates in the moving-picture taking mode; and
FIG. 20 is a diagram showing a relation between a picture frame timing and a light-emission drive timing of a light-emitting diode in the moving-picture taking mode.

### (First Embodiment)

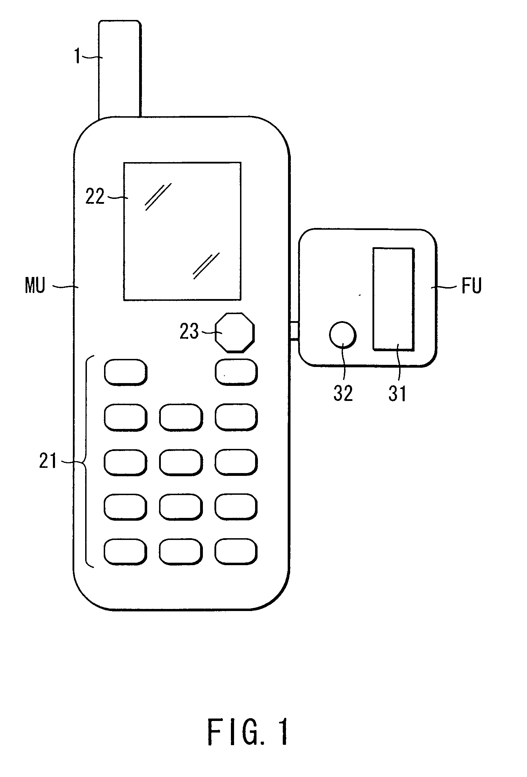

FIG. 1 shows a mobile communication terminal MU according to the first embodiment of the invention. The terminal MU can function as a camera, as well.

The terminal MU comprises a housing. An antenna 1 is mounted on an upper part of the housing. On the front panel of the housing, a key input section 21, a display section 22, and a camera 23 are arranged. Moreover, an earphone jack is provided in one side of the housing. A flash unit FU is connected to the earphone jack and can be removed from the jack. The flash unit FU has a light-emitting section 31 and a charge indicator 32. The light-emitting section 31 is provided in the front of the flash unit FU. The charge indicator 32 comprises a neon tube.

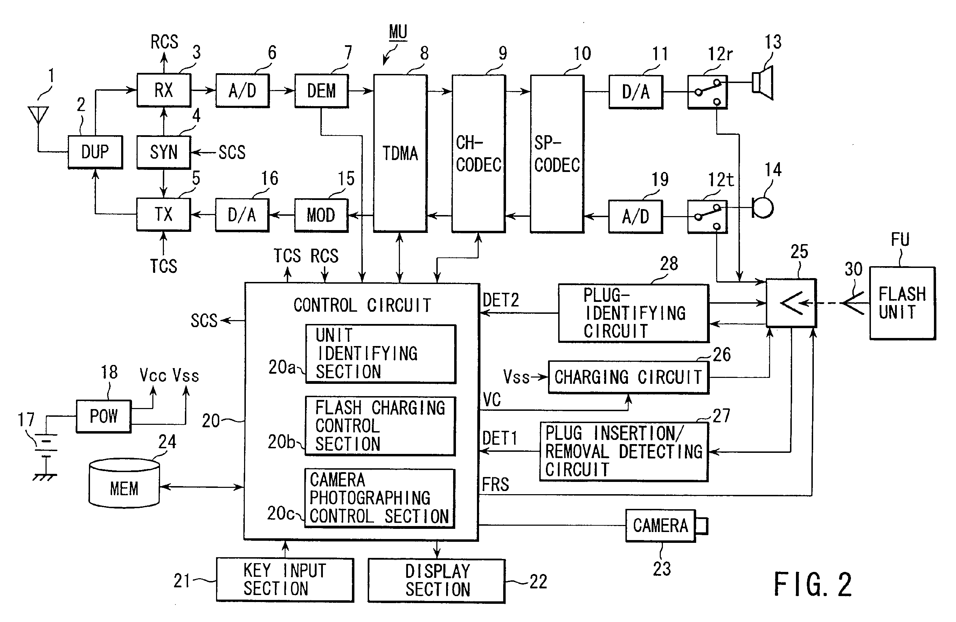

FIG. 2 shows the circuit incorporated in the mobile communication terminal MU.

As can be understood from FIG. 2, the antenna 1 receives a radio signal from a base station (not shown) via a radio channel. In the terminal MU, a receiving circuit (RX) 3 receives the radio signal via a duplexer (DUP) 2. The receiving circuit 3 mixes the radio signal with a local oscillation signal. The radio signal is thereby down-converted into an intermediate-frequency signal. The local oscillation signal has been by generated a frequency synthesizer (SYN) 4, which is controlled by a controlling signal SCS supplied from the control circuit 20. An A/D converter 6 including a low-pass filter converts the intermediate-frequency signal to a digital intermediate-frequency signal. The digital intermediate-frequency signal is input to a digital demodulation circuit (DEM) 7.

The digital demodulation circuit 7 performs frame synchronization and bit synchronization on the digital intermediate-frequency signal. The circuit 7 demodulates the digital intermediate-frequency signal, generating a base-band signal. The base-band signal is input to a TDMA (Time Division Multiple Access) circuit 8. The TDMA circuit 8 extracts a timeslot from each transmission frame of the base-band signal. Information about the frame synchronization and the bit synchronization, acquired at the above-mentioned digital demodulation circuit 7, is notified to the control circuit 20.

The base-band signal extracted from the TDMA circuit 8 is input to a channel codec (CH-CODEC) 9. In the channel codec 9, the base-band signal undergoes error correction decoding. In a data communication mode, information data such as an e-mail is inserted into the base band signal. In a speech mode, speech data is inserted into the base band signal.

The speech data is input to the speech codec (SP-CODEC) 10. The speech codec 10 performs a voice decoding process on the base-band signal, reproducing a digital call-receiving signal. A D/A converter 11 converts the digital call-receiving signal into an analog call-receiving signal. The analog call-receiving signal is input to a speaker amplifier (not shown) through a switching circuit 12r. Then, the analog call-receiving signal is supplied to a speaker 13. The speaker amplifier provided in the speaker 13 amplifies the signal. The signal amplified is output from the speaker 13.

The information data, such as an e-mail or downloaded data, is input to the control circuit 20. The control circuit 20 stores the information data into a memory (MEM) 24, while decoding the data and displaying the data on the display section 22.

Meanwhile, a user inputs a call-sending signal into a microphone 14. The amplifier (not shown) incorporated in the microphone 14 amplifies the call-sending signal. The call-sending signal amplified is input to an A/D converter 19 via a switching circuit 12t. The A/D converter 19 converts the signal into a digital call-sending signal. The speech codec (SP-COD) 10 performs voice decoding on the digital call-sending signal. More precisely, the echo canceller (not shown) provided in the speech codec 10 cancels the echo component of the signal. Transmission data is thereby acquired.

The transmission data is input to the channel codec (CH-COD) 9. The codec 9 carries out error correction coding on the transmission data. The information data, such as the picture data or the e-mail, output from the control circuit 20 is input to the channel codec 9, too. The information data undergoes the error correction coding. The transmission data output from the channel codec 9 is input to the TDMA circuit 8. The TDMA circuit 8 forms a TDMA transmission frame. Then, the TDMA circuit 8 inserts the transmission data into the timeslot assigned to the mobile communication terminal MU and contained in the formed TDMA transmission frame. The TDMA circuit 8 generates data, which is input to the digital modulation circuit (MOD) 15.

The digital modulation circuit 15 implements digital modulation to the transmission data. The transmission data modulated is input to A D/A converter 16. The converter 16 converts the transmission data into an analog signal. The analog signal is supplied to a transmitting circuit (TX) 5. The digital modulation that the circuit 15 performs is, for example, π/4 shift DQPSK (π/4 shifted, differentially encoded quadrature phase shift keying) method.

The transmitting circuit 5 mixes the demodulated transmission data with the local oscillation signal, thereby up-converting the demodulated transmission data into a radio signal. A transmission power amplifier (not shown) amplifies the radio signal to a predetermined transmission power level. The radio signal so amplified is supplied to the antenna 1 via the duplexer 2. The antenna 1 transmits the radio signal toward the base station (not shown).

As indicated above, the mobile communication terminal MU comprises the key input section 21, the display section 22, the camera 23, and the memory (MEM) 24.

The key input section 21 comprises function keys, a dialing key, a shutter key, and a charging key. The function keys include a dispatching key and an ending key. When pushed, the shutter key causes the camera 23 to operate. The charging key is pushed to recharging the flash unit FU. The shutter key and the charging key may be replaced by two of the keys provided for communication, under the control of software.

A liquid crystal display (LCD) is provided on the display section 22. Display data output from the control circuit 20 is displayed on the LCD. The display data includes information data such as an e-mail or picture data, management data such as a phone book or a transmission/reception history, and pikt information indicating the operating state of the device, such as the received electric field intensity or an amount of remaining battery.

The camera 23 uses a solid-state imaging element such as a CCD (Charge Coupled Device) or a CMOS (Complementary Metal Oxide Semiconductor), and it is controlled by the control circuit 20. The memory 24 is, for example, a RAM or a flash memory. The memory 24 stores the phone book, or the e-mail received, or the data downloaded from the terminal of the user who is the other party of the communication or from an information site. The memory 24 holds the picture data acquired by the camera 21, the e-mail transmitted, and the like.

A power circuit 18 generates a power-supply voltage Vcc and a charging voltage Vss from the output voltage of a battery 17 that is composed of a secondary battery. The power-supply voltage Vcc is necessary for the operation of the respective circuits of the mobile communication terminal MU. The charging voltage Vss is necessary for charging the flash unit FU.

The mobile communication terminal MU comprises an earphone jack 25, a charging circuit 26, a plug insertion/removal detecting circuit 27, and a plug-identifying circuit 28. The jack 25 and the circuits 26, 27 and 28 are used to drive the flash unit FU incorporated in the terminal.

The earphone jack 25 can hold an earphone unit (not shown). Further, the jack 25 may hold the flash unit FU. The earphone jack 25 is connected to the D/A converter 11 and the A/D converter 19 by means of the switching circuits 12r and 12t. The control circuit 20 controls the switching circuits 12r and 12t.

The charging circuit 26 receives the charging voltage Vss from the power circuit 18 and applies the same, only for the charging period designated by a controlling signal VC supplied from the control circuit 20. The control signal VC may designate two charging periods, for which the charging voltage Vss may be applied. The first charging period (for example, 15 seconds) is long enough for charging the flash unit FU from the uncharged state to a fully-charged state. The second charging period (for example, 10 seconds) is long enough for charging the flash unit FU from a partially-discharged state to the fully-charged state.

The plug insertion/removal detecting circuit 27 can detect the insertion and removal of the connector plug of the earphone unit or the connector plug of the flash unit FU, into and from the earphone jack 25. Upon detecting the insertion or removal of the either connector plug, the circuit 27 generates a detection signal DET1. The signal DET1 is supplied to the control circuit 20.

The plug-identifying circuit 28 applies an identification signal to a specific terminal of the earphone jack 25 when the plug insertion/removal detecting circuit 27 detects the insertion of the plug. Then, the circuit 28 determines whether identification signal is returned, as detected voltage, from the flash unit FU through any other specific terminal. If the circuit 28 determines that the identification signal has been returned, it generates a plug-insertion signal DET2. This signal DET2 is supplied to the control circuit 20.

The control circuit 20 comprises a microcomputer. More precisely, the circuit 20 comprises not only ordinary control sections such as a radio access control section or a call control section, but also special control sections such as a unit identifying section 20a, a flash charging control section 20b, and a camera photographing control section 20c.

The unit identifying section 20a receives the detection signal DET1 output from the plug insertion/removal detecting circuit 27 and detects that a connector plug is installed to the earphone jack 25. When the section 20a detects the insertion of the connector plug, it determines which external unit, the earphone unit or the flash unit FU, has been inserted into the earphone jack 25, from the plug-insertion signal DET2 supplied from the plug-identifying circuit 28.

The camera photographing control section 20c displays the moving picture photographed by the camera 23 on the LCD of the display section 22, as long as the mobile communication terminal MU remains in the camera mode. The control section 20c causes the memory 24 to store the still picture data acquired by the camera 23 when the shutter key is pressed. In the camera mode, the control section 20c determines whether the terminal MU has received an incoming call. When an incoming call is detected, the control section 20c switches the operation mode of the terminal MU, from the camera mode and transits to a call-receiving mode.

The flash charging control section 20b starts operating in flash mode, when the user presses, for example, a charging key to use the flash unit FU while the terminal MU remains in the camera mode is set, transits to the flash mode. In the flash mode, the flash charging control section 20b determines whether preset charging conditions are satisfied. If the charging conditions are satisfied, the control section 20b determines whether the flash unit FU is not charged at all or is being charged. If the flush unit FU is not charged at all, the first charging period is selected. If the flush unit FU is being charged, the second charging period is selected. The flash charging control section 20b generates a charging control signal VC, which designates the charging period selected. The signal VC is supplied to the charging circuit 26.

Further, the flash charging control section 20b determines the conditions of operating the flash during the charging control. More specifically, the control section 20b determines whether there is a call, either an incoming call and or an outgoing call. Then, if there is a call, the operation mode of the mobile communication terminal MU is switched, from the flash mode to an incoming-call mode or an outgoing-cal mode.

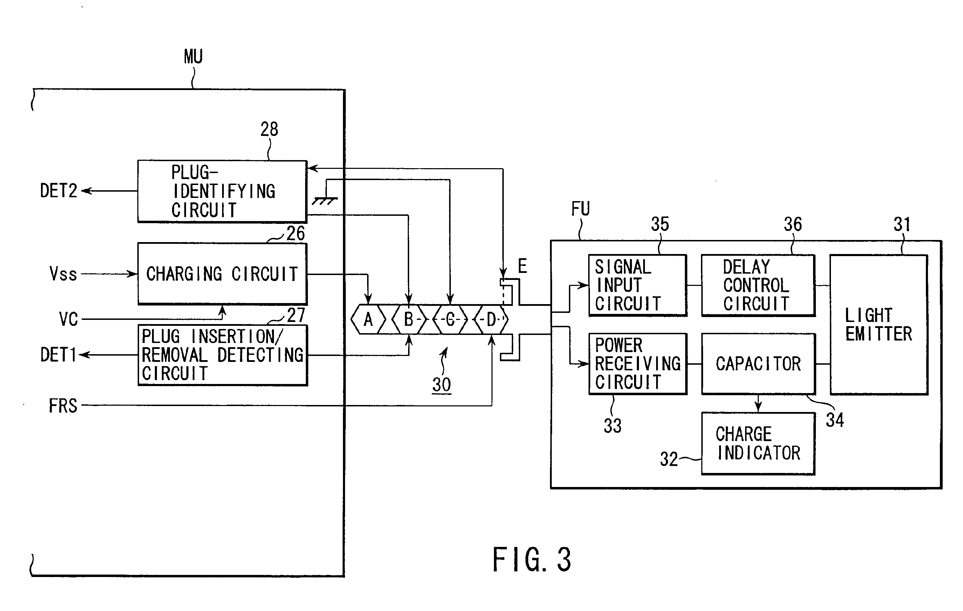

The flash unit FU and the connector plug 30 will be described, with reference to FIG. 3.

The flush unit FU comprises a light emitter 31, a charge indicator 32, a receiving circuit 33, a capacitor 34, a signal input circuit 35, and a delay control circuit 36. The light emitter 31 may be a flash lamp. The charge indicator 32 may be a neon tube.

The receiving circuit 33 receives the charging voltage Vss from the charging circuit 26 of the mobile communication terminal MU and applies the voltage Vss to the capacitor 34. The capacitor 34 is thereby charged. The signal input circuit 35 receives a light-emission control signal FRS from the control circuit 20 of the mobile communication terminal MU. The delay control section 36 receives a light emission control signal FRS from the signal inputting section 35, delays the signal FRS by a preset delay time, and supplies the signal FRF, thus delayed, to the light emitter 31. Therefore, the capacitor 34 is discharged and the light emitter 31 emits light.

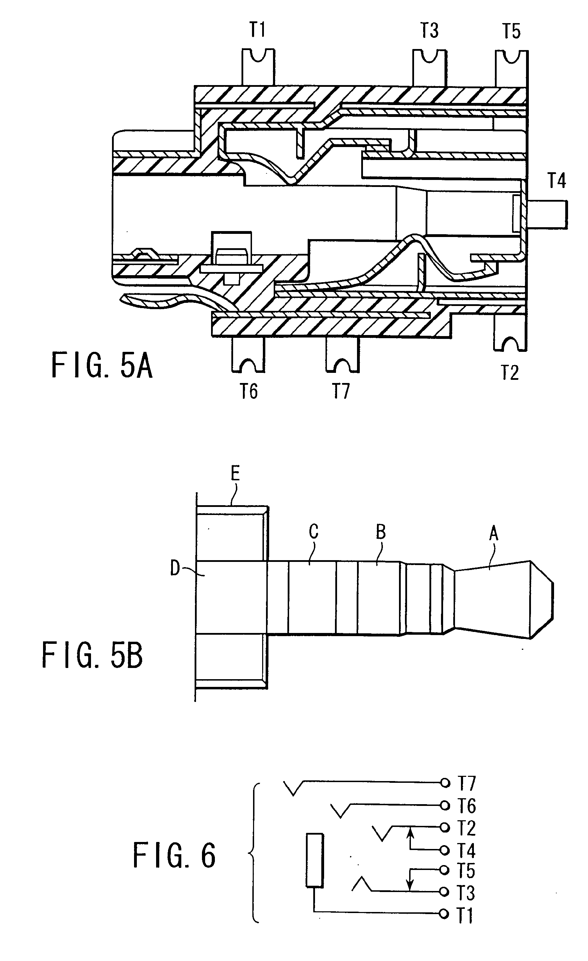

The connector plug 30 comprises five terminals A, B, C, D, and E that are in a line from the edge in the order mentioned. The plug 30 is inserted to the earphone jack 25. The earphone jack 25 has seven terminals that help to accomplish stereo audio output and microphone input. FIG. 5A is a sectional view of the earphone jack 25. FIG. 5B is a side view of the connector plug 30. FIG. 6 illustrates the circuit provided in the earphone jack 25.

The terminal A of the connector plug 30 is used to receive the charging voltage Vss. It contacts a terminal T2 arranged at the deepest section of the earphone jack 25. The terminal T2 provided at the deepest section of the earphone jack 25 serves as a charging terminal, because any terminals other than the terminal A should not contact the terminal T2 while the connector plug 30 is being inserted into or removed from the earphone jack 25.

The terminal B is used to detect the insertion/removal of the plug and to receive the plug-insertion signal. The terminal B contacts the terminal T3 of the earphone jack 25. The terminal C is used as an earth terminal and contacts the terminal T6 of the earphone jack 25. The terminal D is used to receive the light-emission control signal FRS and contacts the terminal T1 of the earphone jack 25.

The terminal E is connected to the terminal B in the connector plug 30 and contacts the terminal T7 of the earphone jack 25. In the connector plug 30 thus constructed, the plug-insertion signal DET2 supplied to the terminal B is returned as a voltage to the plug-identifying circuit 28 via the terminal T7 of the earphone jack 25. It will be described how the mobile communication terminal MU operates.

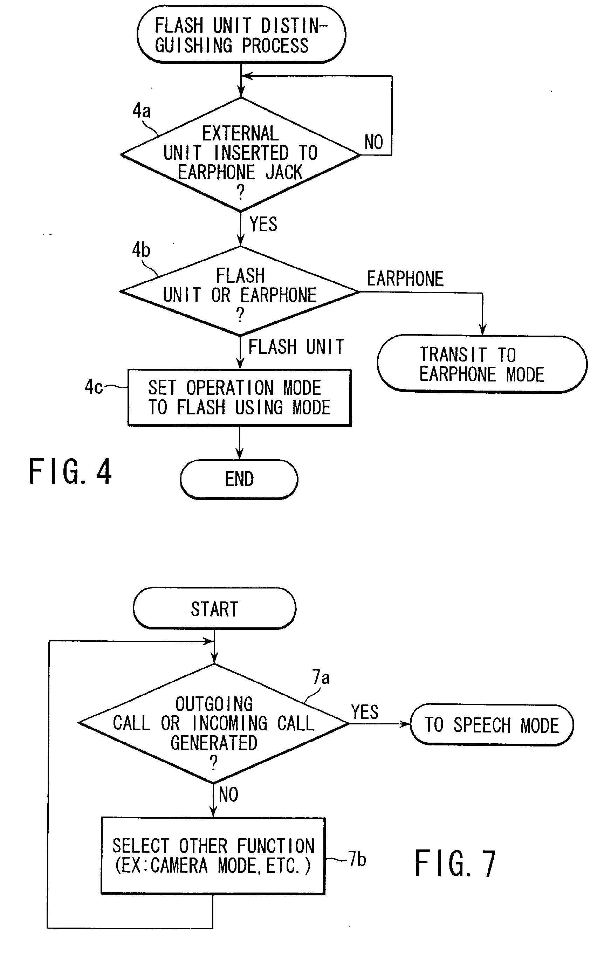

First, it is determined that the flash unit FU is connected to the earphone jack 25, as will be described below with reference to the flowchart of FIG. 4. At step 4a, the control circuit 20 of the mobile communication terminal MU determines whether the connector plug of an external unit has been inserted into the earphone jack 25.

Assume that the user inserts the connector plug 30 of the flash unit FU has been inserted into the earphone jack 25 of the mobile communication terminal MU to implement flash photographing. Then, the plug insertion/removal detection circuit 27 generates a plug-insertion signal DET1, which is supplied to the control circuit 20. From the plug-insertion signal DET1 the control circuit 20 determines at step 4a that the plug of an external unit is inserted into the earphone jack 25.

When the connector plug 30 is inserted into the earphone jack 25, the plug-identifying circuit 28 supplies a plug-identifying signal to the terminal B of the connector plug. If the connector plug inserted into the jack 25 is the plug of the earphone unit, the voltage corresponding to the plug-insertion signal is not applied back to the mobile communication terminal MU. If the connector plug inserted is the connector plug 30 of the flash unit FU, the voltage corresponding to the plug-insertion signal is applied back to the plug-identifying circuit 28 from the terminal E, because the terminal B and the terminal E are connected to each other in the connector plug 30. Then, a plug-identifying signal DET2 is supplied from the plug-identifying circuit 28 to the control circuit 20. The control circuit 20 determines that the external unit is the flash unit FU, from the signal DET2 at the step 4b. Then, the process goes to step 4c, at which the operating mode of the mobile communication terminal MU changed to the flash mode to use the flash unit FU.

If the detected voltage corresponding to the plug-insertion signal is not applied back to the plug-identifying circuit 28, the control circuit 20 determines that the external unit is other than the flush unit FU, such as the earphone unit. Then, the operation mode of the terminal MU is changed in accordance with the type of the external unit.

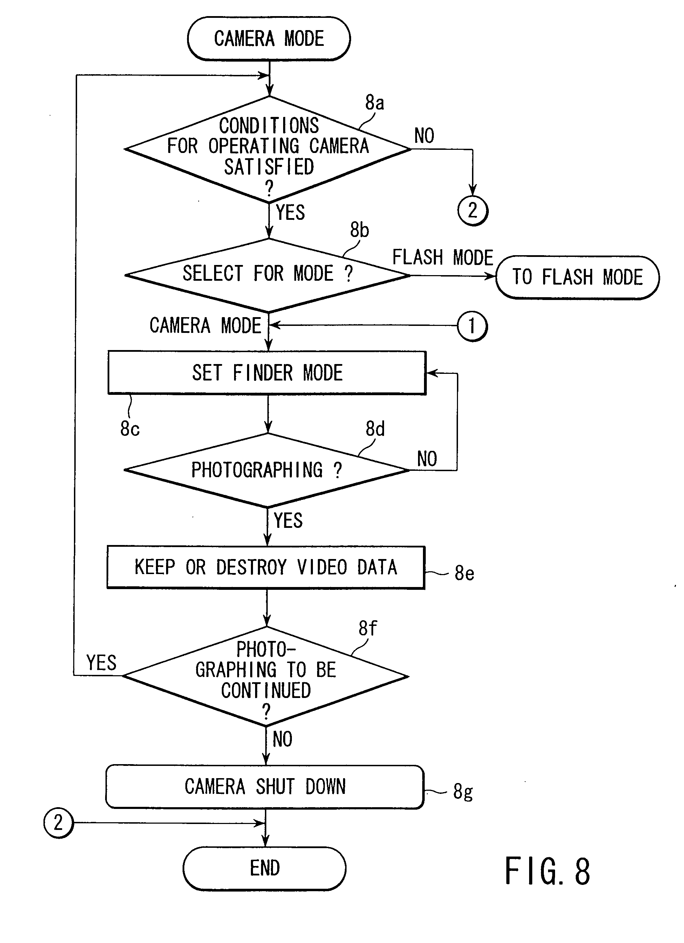

After the flush unit FU is connected to the earphone jack 25, the control circuit 20 determines at step 7a (FIG. 7) whether an incoming call has arrived or an outgoing call is being transmitted. If NO at step 7a, the control circuit 20 determines at step 7b in which mode the mobile communication terminal Mu is operating. If the YES in step 7a, the operation mode of the terminal Mu is changed to the speech mode.

Assume that the user selects, for example, the camera mode. Then, the control circuit 20 sets the camera mode and starts operating as will be described with reference to the flowchart of FIG. 8.

First, the control circuit 20 determines at step 8a whether the conditions of operating the camera are satisfied. That is, the control circuit 20 monitors a request for the control of the outgoing or incoming call and a request for the control of position registering. If the control of outgoing call control, control of the incoming call control, or the position registering control is not requested, the control relating to the camera mode is continued.

Then, at step 8b, the control circuit 20 determines which operation mode, flash mode or camera mode, has been selected. If the camera mode has been selected, the LCD of the display section 22 functions as a finder at the step 8c, and the moving picture data photographed by the camera 23 is displayed on the LCD. When the user presses the shutter key, the control circuit 20 goes to step 8d to the step 8e. At step 8e, the control circuit 20 holds the still picture data photographed in the memory 24. If the operates the terminal Mu to erase the data, the picture data is erased in the memory 24.

When a photographing control for one picture ends, the control circuit 20 determines at step 8f whether one picture has been taken. If the user operates the terminal Mu to release the camera mode, the control circuit 20 goes to step 8g. In step 8g, the control circuit 20 suspends the operation of the camera 23 and the display section 22 and cancels the camera mode. Then, the circuit 20 returns to the waiting control shown in FIG. 7. If the user does not operate the terminal Mu to release the camera mode, the circuit 20 returns to the step 8a. In this case, the control relating to the camera mode, described above, is repeatedly carried out.

Assume that, while the mobile communication terminal MU remains in the camera mode, an outgoing or incoming call is generated or an attempt is made to implement the position registering control. In this case, the control circuit 20 cancels the camera mode when it detects, at step 8a, the outgoing or incoming call, or the start of the position registering control. The circuit 20 changes the operation mode of the terminal Mu to the mode of controlling the call or incoming call or to the mode of controlling the position registration.

If a request for the control of the outgoing or incoming call, or a request for the control of the position registering is generated while the camera mode is set, the control relating to the camera mode is suspended, and the control of the call or incoming call or the control of the position registration is carried out.

This eliminates the risk that the control relating to the camera mode and the control of the outgoing or incoming call or of the position registration overlap in time. The camera photographing and the radio transmission/reception will not take place at the same time. Thus, a temporary increase of the power current is prevented. Hence, the battery voltage is prevented from decreasing, ensuring the stable operation of the control circuit 20.

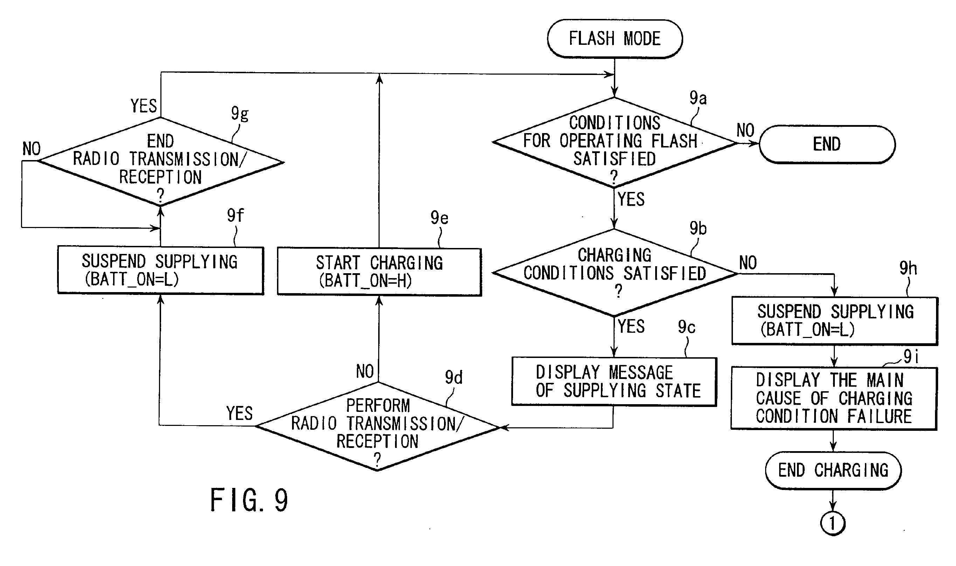

It will be described how the control circuit 20 operates while the mobile communication terminal MU is set in the flash mode. Assume that the user presses the charging key to implement the flash photographing after the terminal Mu has been set into the camera mode. Then, at step 8b the control circuit 20 determines that the user has pressed the charging key. The control circuit 20 performs the control relating to the flash mode, as will be explained below with reference to the flowchart of FIG. 9.

First, the control circuit 20 changes the operation mode of the terminal Mu to the flash mode. At step 9a, the circuit 20 determines whether the conditions of operating the flash are satisfied, by monitoring the request for the control of the outgoing or incoming call control. Unless any attempt has been made to control the outgoing or incoming call, control circuit 20 determines that the conditions of operating the flash are satisfied.

If the control circuit 20 determines that the conditions of operating the flash are satisfied, it then determines at a step 9b whether or not charging conditions are satisfied. The charging conditions are as follows:
Charging condition 1: The flush unit FU is connected to the terminal Mu.
Charging condition 2: The charging key is kept depressed for a time shorter than a predetermined time.
Charging condition 3: More than 10% of battery power remains in the mobile terminal unit MU.
Charging condition 4: The charging period has not expired.

The charging condition 1 must be satisfied to prevent the charging if the flash unit FU is not ready. The charging condition 2 must be satisfied to avoid false charging if the user keeps pressing the charging key by mistake. The charging condition 3 must be satisfied not to charging the flash unit FU electrically if the power in the buttery 17 of the mobile communication terminal MU decreases. This prevents the battery from being used up and the mobile terminal unit MU from becoming unable to operate when the flash unit FU is charged. The charging condition 4 prevents the overcharging of the flash unit FU after the charging is completed.

When the charging conditions 1 to 4 above are satisfied, the control circuit 20 goes to step 9c and. At step 9c, the circuit 20 makes the display section 22 display a message to inform that the power is being supplied. Then, at step 9d, the control circuit 20 determines whether it has been attempted to implement radio transmission. If the radio transmission operation has not been implemented, the control circuit 20 generates a charging control signal VC at step 9e. The signal VC is supplied to the charging circuit 26. The charging voltage Vss is thereby applied from the charging circuit 26 to the receiving circuit 33 of the flash unit FU via the terminal T2 of the earphone jack 25 and the terminal A of the connector plug 30. The capacitor 34 is therefore charged.

During the charging operation, the user can clearly know that the flash unit FU is being charged from the message displayed on the LCD of the display section 22. When the capacitor 34 is fully charged, the neon tube of the charging indicator 32 of the flash unit FU is lit. Seeing this, the user can recognize the completion of charging.

If none of the charging conditions 1 to 4 is satisfied, the control circuit 20 goes step 9h and stops the supply of power. That is, the circuit 20 generates no charging control signal VC. Accordingly, no charging voltage Vss is supplied from the charging circuit 26 to the flash unit FU. Hence, the capacitor 34 is not charged. At this time, the control circuit 20 generates a message indicating "main cause of failure of establishing charging conditions" at step 9i and causes the LCD of the display section 22 to display the message. Reading this message, the user knows why the flash unit FU is not charged.

Assume that, for example, a request for implementing the control relating to the incoming call is generated during the charging operation. Then, the control circuit 20 determines that it has been is attempted to implement the radio transmission/reception operation. The circuit 20 goes from step 9d to step 9f. At step 9f, the circuit 20 immediately causes the charging circuit 26 to stop applying the charging voltage to the flash unit FU. The control circuit 20 then changes the operation mode of the device from the flash mode to the control mode relating to the incoming call.

When the control relating to the incoming call ends and suspension of the operation of the radio circuit section is confirmed at step 9g, the control circuit 20 changes the operation mode of the device from the control mode relating to the incoming call, back to the flash mode. Then, the circuit 20 resumes the charging control described above.

That is, even if a request for the outgoing or incoming call control is generated while the flash mode is set, the charging control in the flash mode is suspended, and the control relating to the outgoing call and incoming call is implemented before the charging control is performed.

Thus, there is no case where the supply of power in the flash mode and the radio transmission/reception by the control relating to the outgoing call and incoming call are carried out at the same time. This avoids a temporary increase of the power current and, hence, prevents the battery voltage from falling. The control circuit 20 can therefore operate in stable conditions.

In the first embodiment, a request for implementing the control relating to the outgoing call and incoming call is monitored in the camera mode and the flash mode, as has been described above. If a request is generated, the photographing control in the camera mode and the charging control in the flash mode are entirely or partly suspended. In this case, prior to the control, the control relating to the outgoing or incoming call is implemented prior to the charging control.

Accordingly, there is no possibility the control by the camera mode or the flash mode, and the control relating to the outgoing or incoming call or the position registering control overlap with each other. This prevents the decline of the battery voltage, because a rapid increase of the current is avoided. The control circuit 20 can operate in a stable condition.

The operation mode of the device may be changed to the control relating to the incoming or outgoing call or to the position registering control during the charging control performed in by the flash mode. In either case, the radio transmission/reception is automatically started and the operation mode automatically returns to the charging control upon completion of the radio transmission/reception. It is therefore unnecessary for the user to press the charging key again after the radio transmission/reception ends. In other words, the user need not be bothered to press the key in such a case.

### (Second Embodiment)

A second embodiment of the mobile communication terminal according to the present invention incorporates a camera and a flash circuit. A high-luminance flash lamp such as a xenon lamp is used as the light emitting section of the second embodiment. The flash circuit includes a charging/discharging circuit that drives the high-luminance flash lamp. Moreover, timing control is performed to prevent the charging of the charging/discharging circuit and the radio communication from overlapping in time.

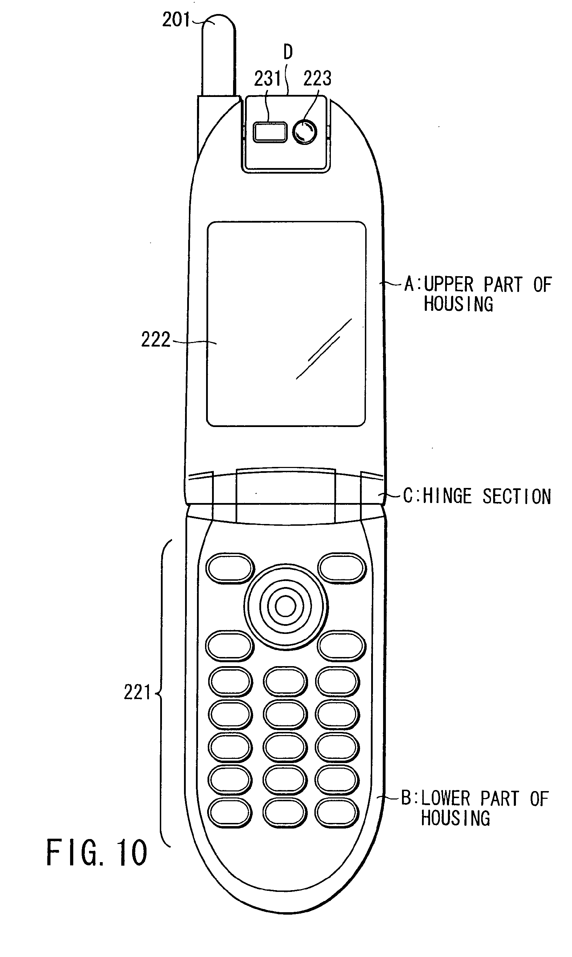

FIG. 10 is a front view of the mobile communication terminal according to the second embodiment of the invention.

The mobile communication terminal is a folding-type terminal. The terminal has a box-shaped upper body A and a box-shaped lower body B. The bodies A and B are connected to each other by a hinge C. The hinge C enables the bodies A and B to rotate with respect to each other. A liquid crystal display (LCD) 221 and a speaker (not shown) for receiving a call are arranged on a front face panel of the upper body A. A key input section 221 and a microphone (not shown) for transmitting a call are arranged on a front face panel of the lower body B.

A camera unit D and an antenna 201 are provided on an upper top end of the upper body A. The camera unit D contains a camera 223 and a light emitter 231 and can rotate toward and away from the upper body A by using a rotation mechanism. The rotation mechanism makes it possible for the user to direct the camera 223 and the light emitter 231 to the object of photography. Owing to the rotation mechanism, the user can photograph the surrounding scenery or people, documents, and his or her own face, while using the display section 222 as a finder.

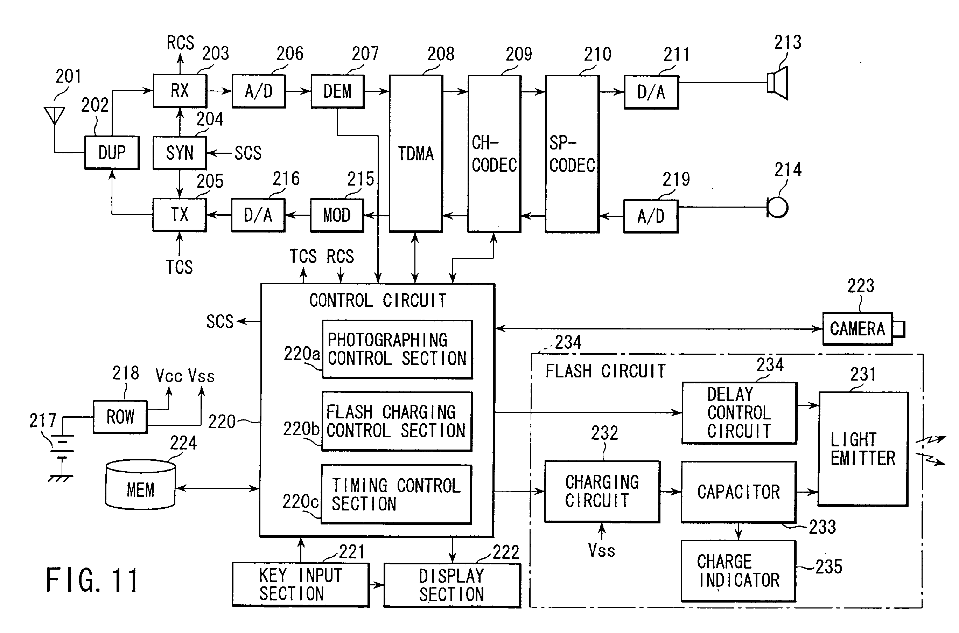

FIG. 11 is a block diagram showing the circuit structure of the mobile communication terminal that is the second embodiment of the invention.

As FIG. 11 shows, an antenna 201 receives a radio signal transmitted from a base station (now shown) via a radio channel. The radio signal is input to a receiving circuit (RX) 203 via a duplexer (DUP) 202. The receiving circuit 203 mixes the received radio signal with a local oscillation signal. The local oscillation signal has been generated by a frequency synthesizer (SYN) 204 from a controlling signal SCS output from a control circuit 220. The circuit 203 then performs down-conversion on the resultant mixture signal, converting the same into an intermediate-frequency signal. The intermediate-frequency signal is converted into a digital signal by an A/D converter 206 that includes a low-pass filter. The digital signal is input to a digital demodulation circuit (DEM) 207.

The digital demodulation circuit 207 performs first frame synchronization and bit synchronization on the digital signal and then digital demodulation on the digital signal, generating a base-band signal. The base-band signal is input to a TDMA (Time Division Multiple Access) circuit 208. The TDMA circuit 208 extracts a timeslot for the device, from each transmission frame of the base-band signal. The information about the frame synchronization and bit synchronization carried out in the digital demodulation circuit 207 is supplied to a control circuit 220.

The base-band signal extracted by the TDMA circuit 208 is input to a channel codec (CH-CODEC) 209. The channel codec 209 performs error-correction decoding on the base-band signal. As a result, information data, such as an e-mail, is inserted into the base-band signal in the data communication mode, and speech data is inserted into the base-band signal in the speech mode.

The speech data is input to a speech codec (SP-CODEC) 210. The codec 210 performs voice decoding on the speech data, reproducing a digital call-receiving signal. A D/A converter 211 converts the digital call-receiving signal to an analog call-receiving signal, which is input to a speaker amplifier (not shown). The speaker amplifier amplifies the call-receiving signal, which is supplied to a speaker 213. The speaker 213 generates the sound represented by the call-receiving signal amplified by the speaker amplifier.

Information data, such as an e-mail or downloaded data, is supplied to a control circuit 220. The control circuit 220 holes the information data in a memory (MEM) 224, while decoding the data and displaying the data on the LCD provided in a display section 222.

The user inputs a call-sending signal via a microphone 214. The call-sending signal is amplified to a predetermined level by a microphone amplifier (not shown). The signal amplified is input to an A/D converter 219. The A/D converter 219 converts the signal to a digital call-sending signal. The digital call-sending signal is supplied to an echo canceller (not shown), which removes echo components from the signal. The call-signal is input to the speech codec (SP-COD) 210. The codec 210 voice-decodes the call-sending signal, generating transmission data.

The transmission data is input to the channel codec (CH-COD) 209 and subjected to error correction decoding. Moreover, the information data output from the control circuit 220, such as picture data or an e-mail, is input to the channel codec 209, too. The information data undergoes error correction coding. The transmission data output from the channel codec 209 is input to the TDMA circuit 208. The TDMA circuit 208 processes the transmission data, generating a TDMA transmission frame. The transmission data is inserted into the timeslot provided in the TDMA transmission frame and assigned to the device. The TDMA transmission frame is output to a digital modulation circuit (MOD) 215.

The digital modulation circuit 215 performs digital modulation on the transmission data. The transmission data modulated is input to a D/A converter 216. The D/A converter 216 converts the data to an analog signal, which is input to a transmitting circuit (TX) 205. A π/4 shift DQPSK (π/4 shifted, differentially encoded quadrature phase shift keying) method, for example, is used as a digital modulation method.

The transmitting circuit 205 mixes the demodulated transmission data with a local oscillation signal, and up-converts the data into the radio signal. The radio signal is amplified to a predetermined transmission power level by a transmission power amplifier (not shown). The radio signal amplified is supplied to the antenna 201 via the duplexer 202. The antenna 201 transmits the radio signal to a base station (not shown).

As FIG. 11 shows, the mobile communication terminal has a key input section 221. The key input section 221 comprises various keys being necessary for communication. The keys include a dispatching key, an ending key, function keys, and a dialing key. The section 221 further has a shutter key for making the camera 223 operates and a charging key for charging the flash circuit 230. The shutter key and the charging key need not be provided. In this case, some of the keys necessary for the communication perform the functions of the shutter key and charging key, when controlled by software.

A liquid crystal display (LCD) is provided on the display section 222. The LCD displays the data output from the control circuit 220. The data displayed includes the transmitted/received e-mails or picture data, in addition to management data such as a phone book or transmission/reception history and data indicating an operation state of the device.

The camera 223 is a solid-state imaging element such as a CCD (Charge Coupled Device) or a CMOS (Complementary Metal Oxide Semiconductor). The camera 223 is controlled by the control circuit 220.

The memory 224 is, for example, a RAM or a flash memory. The memory 224 holds a phone book, or the e-mail received or the data downloaded from the terminal of the other party of the communication or from an information site. The memory 224 stores the picture data generated by the camera 223, the transmitted e-mail, and the like, too.

A power circuit 218 generates a power-supply voltage Vcc and a charging voltage Vss from the output voltage of a battery 217 that is composed of a secondary battery. The power-supply voltage Vcc drives the circuits incorporated in the mobile communication terminal. The charging voltage Vss is applied to the capacitor 223 of the flash circuit 230, thus charging the capacitor 223.

The mobile communication terminal has a flash circuit 230 provided in the housing. The flash circuit 230 includes a light emitter 231. The light emitter 231 is a flash lamp of a high-voltage light-emission drive type, such as a xenon lamp. The flash circuit 230 further includes a charging circuit 232, a capacitor 233, a delay control circuit 234, and a charge indicator 235, all for driving the light emitter 231.

The charging circuit 232 applies the charging voltage Vss output from the power circuit 218, to the capacitor 233 only during the charging period designated by the charging control signal supplied from the control circuit 220. Two different charging periods are available. The first charging period is a time long enough for the capacitor 233 to be charged from an uncharged state to a fully-charged state.
(The first charging period is, for example, 15 seconds). The second charging period is long enough for the capacitor 233 to be charged from a partially-discharged state to the fully-charged state. (The second charging period is, for example, 10 seconds.)

The delay control circuit 234 causes the light emitter 231 to emit light the very moment the camera 223 photographs the object. The circuit 234 supplies a light-emission control signal output from the control circuit 220 to the light emitter 231 upon lapse of a preset delay time. The capacitor 233 is thereby discharged, and the light emitter 231 emits light.

The charge indicator 235 is, for example, a neon tube. The indicator 235 lit when the capacitor 233 is fully charged. Thus, the indicator 235 informs the user of the completion of charging.

The control circuit 220 comprises a microcomputer. The control circuit 220 has not only normal control sections, such as a radio access control section or a call control section, but also a camera photographing control section 220a, a flash charging control section 220b, and a timing control section 220c.

The camera photographing control section 220a causes the LCD of the display section 222 to display the moving picture data photographed by the camera 223, while the mobile communication terminal remains in the camera mode. The section 220a makes the memory 224 store the still picture data that the camera 223 photographed when the user pressed the shutter key.

The flash charging control section 220b activates the flash mode when the user presses the charging key the terminal stays in the camera mode. In the flash mode, the section 220b determines whether preset charging conditions are satisfied. If the charging conditions are satisfied, the section 220b determines whether the capacitor 233 of the flash circuit 230 is in the uncharged state. If the capacitor 233 is in the uncharged state, the first charging period is selected. If the capacitor 233 has been partly charged, the second charging period is selected. Then, the flash charging control section 220b generates a charging control signal representing the first or second charging period selected. The charging control signal is supplied to the charging circuit 232.

The timing control section 220c monitors the request for implementing various control modes accompanying the radio transmission operation. such as the outgoing call or incoming call, position registration, or handover, while the terminal remains in the camera mode. When the request for implementing these control modes is input, the terminal is released from the camera mode and is set into the control mode. The data representing the camera mode is stored in a memory. Then, the timing control section 220c determines whether the terminal has been released from the control mode. If the terminal has been released from the control mode, the section 220c automatically changes the operation mode of the terminal, back to the camera mode.

The timing control section 220c determines the flash operation conditions before and during the process of charging the capacitor 233, while the mobile communication terminal stays in the flash mode. More precisely, the timing control section 220c determines whether the control mode accompanying the radio transmission operation, such as the incoming or outgoing call, position registration, or handover, has been requested for. If the control mode has been requested for, the timing control section 220c suspends the charging of the capacitor 233. The terminal is then set into the control mode. When the terminal stops operating in the control mode, it automatically returns to the flash mode, whereby the charging operation starts.

How the mobile communication terminal operates in the camera mode to photograph the object will be described below.

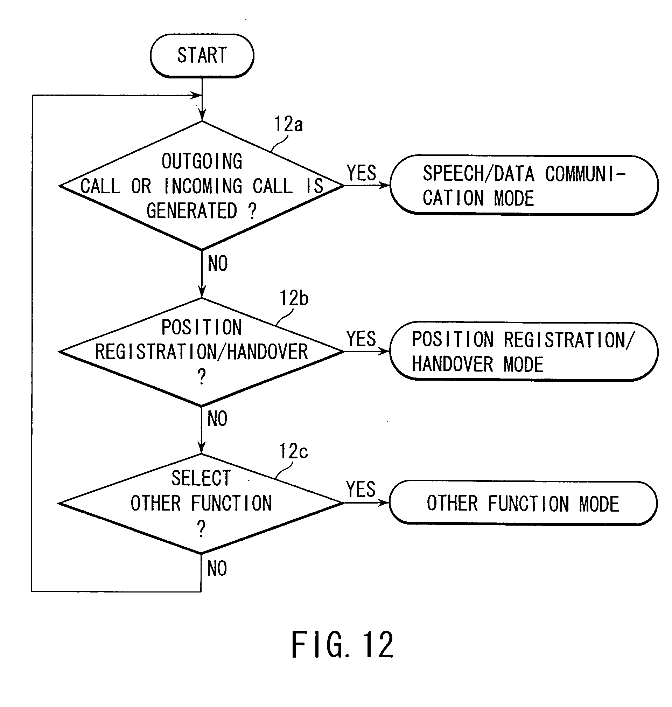

As shown in FIG. 12, the control circuit 220 in the waiting state monitors a request for the control relating to the outgoing or incoming call at step 12a, a request for the position registration/handover at step 12b, and any other function selected, at a step 12c. If an incoming or outgoing call is generated under this condition, the operation mode of the terminal changes the calling mode. If a request for implementing the position registration/handover is generated, the operation mode of the terminal changes to the position registration/handover control.

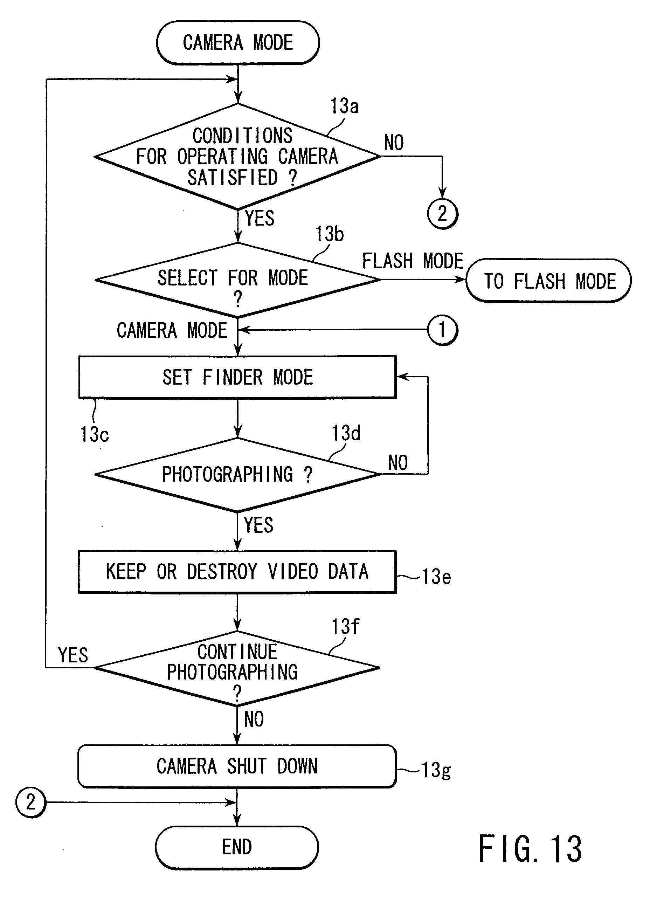

Assume that the user selects, for example, the camera mode. Then, the control circuit 220 starts operating in the camera mode. FIG. 13 is a flowchart showing how the control circuit 220 operates in the camera mode.

First, the control circuit 220 determines at step 13a whether the conditions of operating the camera are satisfied. More specifically, the control circuit 220 monitors a request for the outgoing call or the incoming call and a request for the position registering/handover. If it has not been attempted to implement the control relating to the outgoing call or incoming call or the position registration/handover, the control continues in the camera mode.

If the control continues in the camera mode, the control circuit 220 determines at step 13b which mode has been selected, the flash mode or the camera mode. If the camera mode has been selected, the LCD of the display section 222 operates as a finder at the step 13c. In this case, the LCD of the display section 222 displays the picture photographed by the camera 223.

The user may presses the shutter key. In this case, the control circuit 220 goes step 13d to step 13e. In step 13e, the control circuit 220 holds the still picture data in the memory 224. Besides, if the user operates the key input section 211 to erase the still picture, the still picture data is destroyed in the memory 224.

When the photographing control operation for one picture ends, the control circuit 220 determines at step 13f whether the photographing has completed. If the user operates the key input section 221 to release the terminal from the camera mode, the circuit 220 goes to step 13g. At step 13g, the circuit 220 causes the camera 223 and the display section 222 to stop operating. After the terminal is released from the camera mode, the control circuit 220 performs the waiting control (FIG. 12). If the terminal is not released from the camera mode, the control circuit 220 returns to step 13a and repeats the control in the camera mode as described above.

Assume that the outgoing or incoming call is generated or it has been attempted to implement the control relating to the position registration/handover in the camera mode. Then, the control circuit 20 cancels the camera mode if it detects at step 13a a request for implementing the control relating to the outgoing call or incoming call, or a request for implementing the control relating to the position registration/handover. In this case, the control circuit 20 releases the terminal from the camera mode and sets the terminal into the mode for implementing the control relating to the outgoing or incoming call or the control relating to the position registration/handover.

A request for the control relating to the outgoing or incoming call, or the request for the control relating to the position registration/handover may be generated in the camera mode. In this case, the control relating to the camera mode is suspended and the control relating to the outgoing call or incoming call or the control relating to the position registration/handover is performed instead.

This prevents the photographing in the camera mode from overlapping with the control relating to the outgoing or incoming call or the control relating to the position registration/handover. Thus, there is no possibility that the camera photographing and the radio transmission/reception are carried out at the same time. A temporary increase of the power current can be avoided, and the battery voltage is prevented from decreasing. This ensures a stable operation of the control circuit 220.

When the control relating to the outgoing or incoming call or the control relating to the position registration/handover ends, the control circuit 220 changes the operation mode of the terminal to the camera mode in which the terminal stayed before the transition to the control mode relating to these outgoing call, incoming call or position registration/handover. Therefore, the user need not reset the operation mode of the terminal to the camera mode, and the camera photographing can be implemented continuously.

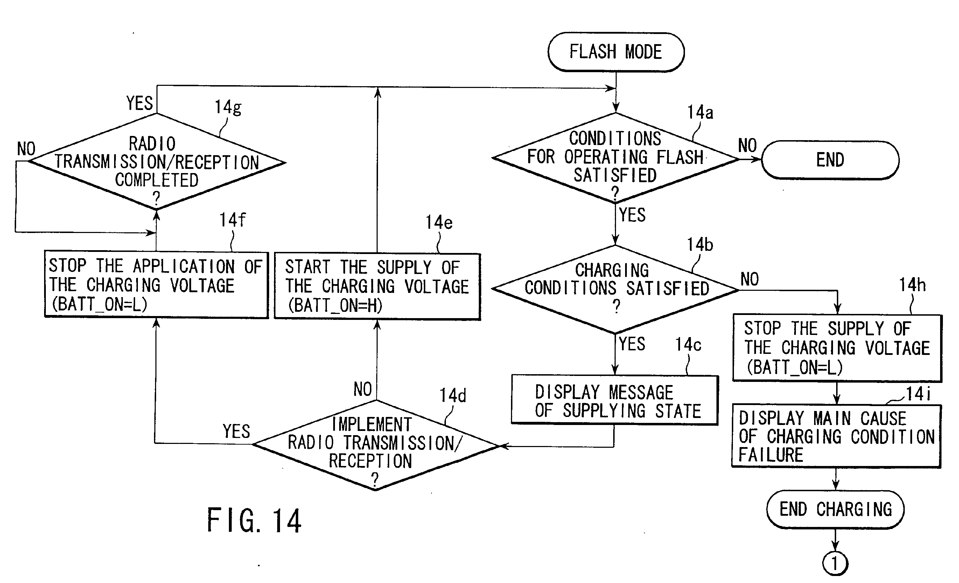

How the mobile communication terminal operates in the flash will be described. Assume that the user depresses the charging key to effect flash photographing in the camera mode. Then, the control circuit 220 detects the depression of the key at step 13b. The control circuit 220 performs its function in the flash mode, as will be described with reference to the flowchart of FIG. 14.

At step 14a, the control circuit 220 determines whether the conditions of operating the flash are satisfied. More precisely, the control circuit 220 monitors a request for the outgoing or incoming call control. If no attempts have been made to implement the control relating to the outgoing or incoming call, it is determined that the conditions of operating the flash are satisfied.

If the conditions of operating the flash are satisfied, the control circuit 220 determines at step 14b whether charging conditions are satisfied. The charging conditions as specified below.

Charging condition 1: The charging key is kept depressed for a time shorter than a predetermined time.

Charging condition 2: More than 10% of battery power remains the mobile communication terminal.

Charging condition 3: The charging period has not expired.

The charging condition 1 is necessary to avoid false charging in the case where the charging key is continuously depressed, contrary to the user's intention. The charging condition 2 must be satisfied to prevent false charging in the case where the charging key is continuously depressed, contrary to the user's intention. The charging condition 3 must be satisfied not to charge the flash circuit 230 in the case where the power remaining in the buttery 217 decreases. This prevents the battery 217 from being used up due to the charging to the flash circuit 230, ultimately preventing the mobile communication terminal from becoming inoperative. The charging condition 4 must be satisfied not to cause the overcharging.

If the charging conditions 1 to 3 above are satisfied, the control circuit 220 goes to step 14c. At step 14c, the circuit 220 causes the LCD of the display section 222 to display a message informing that the power is being supplied. At step 14d, the control circuit 220 determines whether any attempt has been made to implement radio transmission. If no radio transmission has been implemented, the control circuit 220 generates a charging control signal at step 14e. The charging control signal is supplied to the charging circuit 232. The charging circuit 232 applies a charging voltage Vss is to the capacitor 233. The capacitor 233 is thereby charged.

Reading the message displayed on the LCD of the display section 222 , the user can know that the capacitor 233 is being charged. When the capacitor 233 is fully charged, the neon tube of the charging indicator 232 of the flash circuit 230 is lit. Therefore, the user can understand the capacitor 233 has been fully charged.

Any one of the charging conditions 1 to 3 may not be satisfied. If this happens, the control circuit 220 goes to step 14h. In step 14h, the circuit 220 suspends the application of the charging voltage Vss. More specifically, the circuit 220 generates no charging control signals to the charging circuit 232. The charging circuit 232 applies no charging voltage Vss to the capacitor 233. At this time, the control circuit 220 generates a message indicating "the main cause of failure of establishing charging conditions" at step 14i. This message is displayed on the LCD of the display section 222. The user can therefore know why the capacitor 233 is not charged as is desired.

Assume that a request for implementing the control relating to the incoming call is generated during the charging operation. Then, the control circuit 220 determines that an attempt has been made to perform the radio transmission/reception. The circuit 220 goes step 14d to step 14f. At step 14f, the control circuit 220 immediately suspends the supply of charging voltage Vss to the capacitor 233. The control circuit 220 changes the operation mode of the terminal from the flash mode to the control mode relating to the incoming call.

When the control relating to the incoming call ends and the suspension of the operation in the radio circuit section is determined at step 14g, the control circuit 220 change the operation mode of the terminal from the control mode relating to the incoming call, back to the flash mode. Then, the circuit 220 resumes the charging control described above.

Even if the request for the incoming call control is generated in the flash mode, the charging control in the flash mode is suspended, and the control relating to the incoming call is performed first.

Accordingly, the supply of the charging voltage Vss in the flash mode and the radio transmission effected by the incoming-call control and the like will not be performed at the same time. This prevents a temporary increase of the power current and, ultimately, a decrease in the battery voltage Vcc. The control circuit 220 can continuously operate in a stable condition.

As described above, the camera 223 and the flash circuit 230 are provided in the housing of the mobile communication terminal that is the second embodiment. Since the flash unit is not separated from the main body of the terminal, it is easy for the user to carry and operate the terminal.

As indicated above, the request for the outgoing call, the incoming call, or the position registration/handover is monitored before or during the charging of the flash circuit 230. If the request is detected, the charging is suspended and the outgoing call, the incoming call or the control of the position registration/handover is controlled.

This prevents the charging of the capacitor 233 of the flash circuit 230 from overlapping the radio transmission/reception operation accompanying the outgoing call, the incoming call or the position registration/handover. There arise no inconvenience that power is temporarily consumed in large amounts in the mobile communication terminal. A rapid decrease in the power-supply voltage of the battery 217 will not occur, preventing false operation of the microcomputer in the control circuit 220. Various controls are achieved in stable conditions. Moreover, primary controls, such as the control of the outgoing call or incoming call, or the control of the position registration/handover, can be reliably effected prior to other controls.

The operation mode of the terminal may be changed from the flash mode to any other mode relating to the incoming call and the like, during the charging control in the flash mode. In this case, the control is automatically changed back to the charging control in the flash mode when the radio transmission/reception is terminated. Accordingly, the user need not depress the charging key again after waiting for the end of the radio transmission/reception operation. This makes it easier than otherwise for the user to operate the mobile communication terminal.

### (Third Embodiment)

A third embodiment of the mobile communication terminal according to the present invention has a camera and a flash circuit, both provided in the housing of the terminal. A solid light-emitting element such as a white light-emitting diode (a white LED) is used as a light emitting section. The real-time emission of light can therefore be accomplished when a light-emission drive signal is supplied to the light-emitting diode from a control circuit. Therefore, the terminal can photograph not only still pictures in flash mode, but also moving pictures in continuous illumination mode. Moreover, timings of light emission and radio transmission/reception operation are controlled to prevent them from overlapping each other.

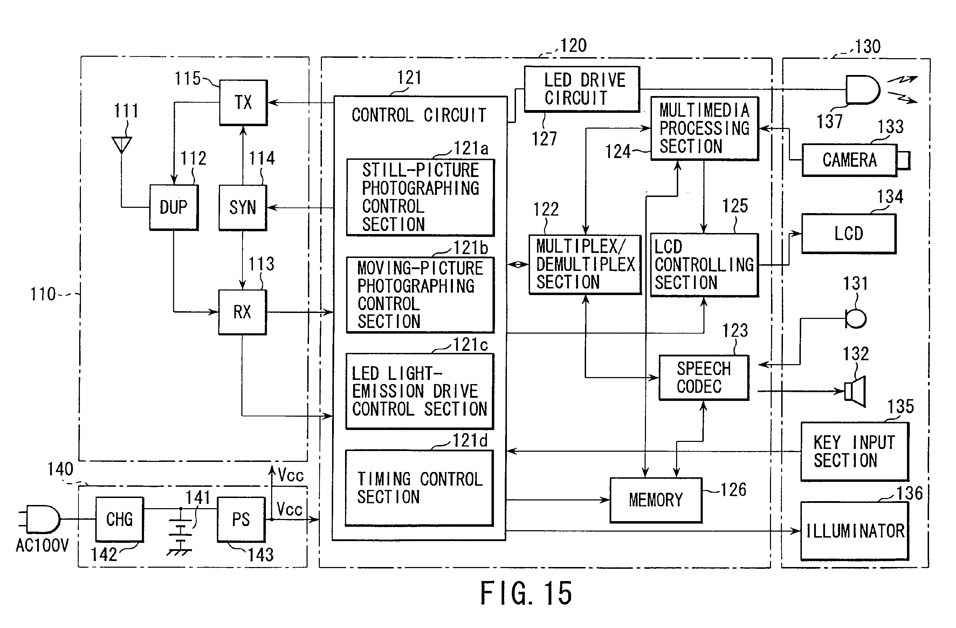

FIG. 15 is a circuit block diagram of the mobile communication terminal according to the third embodiment. The mobile communication terminal is almost the same as the terminal shown in the FIG. 10 in terms of outer appearance.

As FIG. 15 shows, the mobile communication terminal comprises a radio section 110, a base band section 120, an input/output section 130, and a power section 140.

As can be seen from FIG. 15, a radio signal is supplied from a base station (not shown) to the antenna 111 via a radio channel. The radio signal is input to a receiving circuit (RX) 113 via a duplexer (DUP) 112. The receiving circuit 113 comprises a low-noise amplifier, a high-frequency amplifier, a frequency converter, and a demodulator. In the circuit 113, the low-noise amplifier amplifies the radio signal. The frequency converter mixes the signal with a local oscillation signal and converts the frequency the mixed signal to an intermediate frequency or a base-band signal. The local oscillation signal has been generated by a frequency synthesizer (SYN) 114 from a controlling signal output from the control circuit 121. The receiving circuit 113 performs digital demodulation on the intermediate frequency or the base-band signal. The digital demodulation is, for example, orthogonal demodulation corresponding to QPSK or spectrum inverse-diffusion using a diffusion code.

The signal output from the demodulator is input to the base band section 120. The base band section 120 comprises a control circuit 121, a multi-separating section 122, a voice code decoding section (or speech codec) 123, a multimedia processing section 124, an LCD control section 125, and a memory 126.

The signal is supplied from the control section 121 to the multi-separating section 122. The multi-separating section 122 performs a multi-separating process on, for example, a packet called MUX-PDU defined by ITUT H.223. While being received, the packet is divided into audio data, video data, and additional data in accordance with contents of a header. The audio data is supplied to the speech codec 123. The speech coded 1234 decodes the audio data by means of voice code decoding such as AMR (Adaptive Multi Rate), generating a digital voice signal. A digital/analog converter (not show, hereinafter referred to as "D/A converter") converts the digital voice signal to the analog voice signal. The analog voice signal is output from the speaker 132 of the input/output section 130.

On the other hand, the video data is supplied to the multimedia processing section 124. A picture decoding process is performed on the data by, for example, an MPEG4 (Moving Picture Experts Group 4). Then, a video signal expanded by the decoding process is supplied to the LCD 134 of the input/output section 130 via the LCD controlling section 125. The LCD 134 displays the image represented by the video signal. The additional data is distinguished at the control circuit 121 and supplied to the LCD 134 via an LCD controlling section 125. The LCD 134 displays the additional data.

If an answering machine mode is set, the received audio data and video data are stored into the memory 126. The LCD 134 displays the data of a phone book and the transmission/reception history data, which are stored in the memory. The LCD 134 displays the information indicating an operation state of the terminal, too, as pict information. The pict information indicates, for example, the reception quality and the power remaining in a battery 141.

Meanwhile, an audio signal output from a microphone 131 of the input/output section 130 is input to the speech codec 123 of the base band section 120. In the section 120, the audio signal is input to the multi-separating section 122 after its voice is encoded. The video signal output from the camera 133 is input to the multimedia processing section 124 of the base band section 120 and the multi-separating section 122 after it has been subjected to a video coding defined by the MPEG4. The multi-separating section 122 generates a transmission packet (MUX-PDU) by multiplexing the audio data and video data generated by the coding and the control data generated at the control circuit 120, as is described in ITUT H.223. The transmission packet formed at the multi-separating section 122 is output from the control circuit 120 to the transmitting circuit (TX) 115 of the radio section 110.

The transmitting circuit 115 comprises a demodulator, a frequency converter, and a transmission power amplifier. The demodulator performs digital modulation on the transmission data. The transmission data, thus demodulated, is mixed with the oscillation signal transmitted from the transmission station and supplied from the frequency synthesizer 114. A transmission radio frequency signal is thereby generated. The modulating method used is either a QPSK method or a spectrum diffusion method that uses a diffusion code. The transmission power amplifier amplifies the transmission radio frequency signal to a predetermined transmission level. The radio signal amplified is supplied to the antenna 111 via the antenna sharing device 112. The antenna 111 transmits the radio signal toward a base station (not shown).

The power section 140 comprises a battery 141 such as a lithium-ion battery, a charging circuit 142 for charging the battery 141 on the basis of a commercial power output (AC100V), and a voltage generating circuit (PS) 143. The voltage generating circuit 143 is, for example, a DC/DC converter and generates a predetermined power-supply voltage Vcc from the output voltage of the battery 141.

The input/output section 130 incorporates an illuminator 136. The illuminator 136 illuminates the LCD 134 and the key input section 135 while the terminal is being operated and the data communication is undergoing. The illuminator 136 is generally known as "back light" or "illumination."

In the mobile communication terminal according to the third embodiment, the white light-emitting diode (white LED) 137 is provided in the input/output section 130 and used as the flash light emitting section. The light-emission drive circuit 127 is provided in the base band section 120. The light-emission drive circuit 127 raises a voltage of the light-emission drive signal supplied from the control circuit 121, from 4V to 16V. The light-emission drive signal is supplied to the white LED 137.

The control circuit 121 comprises some control sections that characterize the present invention. More specifically, the circuit 121 comprises a still picture shooting control section 121a, a moving-picture photographing control section 121b, an LED light emission control section 121c, and a timing control section 121d.

The still picture shooting control section 121a causes the LCD 134 used as a finder to display a moving picture photographed by the camera 133 if the still-picture taking mode has been selected as camera mode. If the shutter key of the key input section 135 is pressed, the control section 121a holds in the memory 24 the coded data representing the still picture photographed by the camera 133.

The moving-picture photographing control section 121b causes the LCD 134 used as a finder to display the moving picture photographed by the camera 133 if the moving-picture taking mode has been selected as the camera mode. If the shooting button of the key input section 135 is pressed, the control section 121b holds in the memory 126 the coded data representing the still picture photographed by the camera 133 until the shooting button is pressed again. Besides, it is possible to extract some frames from the moving picture data, thereby to save storage area of the memory 126.

The LED light-emission drive control section 121c determines whether the conditions for operating the flash are satisfied if the flash is used in both the still-picture photographing and the moving-picture photographing. To be more specific, the control section 1321c determines whether or not the amount of power remaining in the battery 141 is greater than a predetermined value.

If the operation conditions are satisfied, a pulse-shaped light-emission drive signal is supplied to the white LED 137 via the light-emission drive circuit 127, in synchronism with the photographing of a still picture. The white LED 137 momentarily emits light to photograph the still picture. To photograph a moving picture shooting, the white LED 137 keeps emitting light all the time the moving picture is being photographed. It is sufficient for the LED 137 to emit light while the camera 133 is receiving a picture frame. Therefore the light-emission drive signal is at high level only while the camera 133 is receiving the picture frame. The drive signal is at low level during any other intervals. Thus, the power consumption decreases. The lifetime of the battery can be extended by supplying the light-emission drive signal intermittently and synchronously with the picture frame timing.

The control section 121b cancels the still-picture taking mode and changes the operation mode of the terminal to the control mode accompanying the radio transmission, if a request for the control mode accompanying the radio transmission/reception, such as the outgoing call or incoming call, position registration, or handover. is detected in the step of determining the operating condition of the camera in the still picture shooting control. The control section 121b stores the still-picture taking mode and automatically changes the operation mode of the terminal, back to the still-picture taking mode, from the control mode accompanying the radio transmission/reception.

During the moving-picture photographing control, the control section 121b cancels the moving-picture taking mode and changes the operation mode of the terminal to the control mode accompanying the radio transmission/reception, in the same way as in the still-picture photographing, if a request for implementing the control mode accompanying the radio transmission/reception is detected by determining the condition of operating the camera before the photographing. If a request for implementing the control mode accompanying the radio transmission/reception is generated after the photographing of a moving picture starts, the control section 121b neglects the request and implements the moving picture shooting control continuously. After the moving-picture photographing control, the control section 121b changes the operation mode of the terminal to the control mode accompanying the radio transmission/reception operation.

How the camera incorporated in the mobile communication terminal performs photographing will be described below.

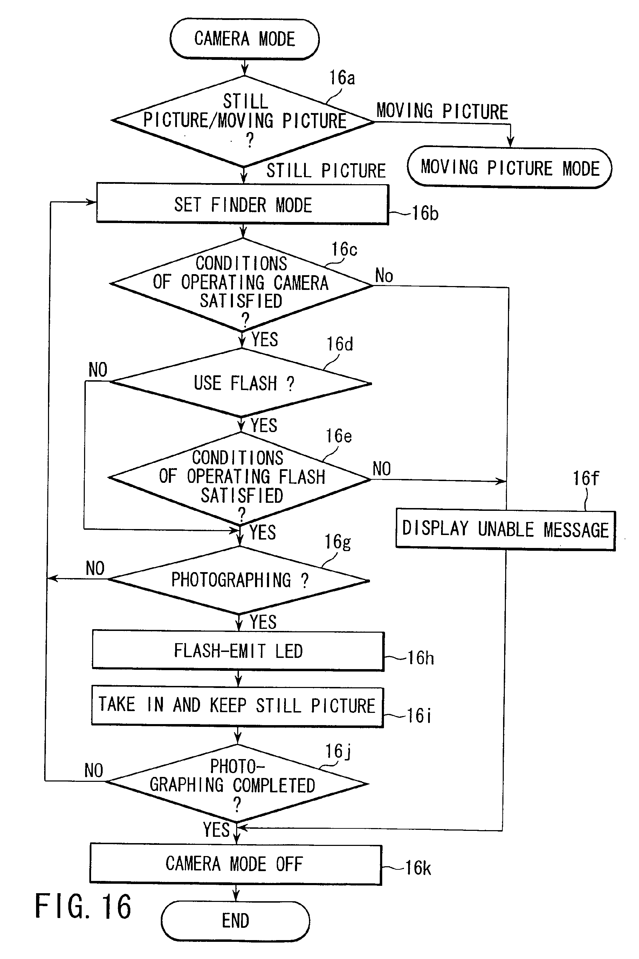

When the user selects the camera mode under a waiting state, the control circuit 121 sets the terminal to the camera mode. The circuit 121 then performs the control relating to the camera mode as will be explained with reference to FIG. 16. FIG. 16 is a flowchart showing the controlling procedure, particularly the method of photographing a still-picture.

At step 16a, the control circuit 121 determines whether the user has selected the still-picture taking mode or the moving-picture taking mode. If the still-picture taking mode has been selected, the control circuit 121 operates the LCD 134 as a finder. It then determines whether the condition of operating the camera is met at a step 16c. For example, it determines whether a request has been made for implementing the control mode accompanying the radio transmission, such as the outgoing call or incoming call, the position registration, or the handover.

At step 16d, the control circuit 121 determines whether the use of the flash is selected. If the user has selected the use of the flash, the circuit 121 goes to step 16e. At step 16e, it determines whether the condition of operating the flash is met. More correctly, the circuit 121 determines whether the power remaining in the battery 141 is greater than the predetermined first value. The control circuit 121 repeatedly determines the conditions of operating the camera and the flash until the shutter button is pressed.

Any one of the operation conditions may be found not to be satisfactory in the step of determining the conditions of operating the camera and the flash. In this case, the control circuit 121 goes to step 16f. In step 16f, the circuit 121 generates a message indicating that the operation condition is not satisfactory and why it is not satisfactory. The control circuit 121 makes the LCD 134 display the message.

Assume that the user presses the shutter button. The control circuit 121 then goes from step 16g to step 16h. If the use of the flash has been selected, the control circuit 121 generates a pulse-shaped, light-emission drive signal in synchronism with the photographing of the still picture. The light-emission drive signal is supplied to the white LED 137 after its voltage is raised from, for example, 4V to 16V at the light-emission drive circuit 127. As the result, the white LED 137 momentarily emits light in accordance with the pulse-shaped light-emission drive signal.

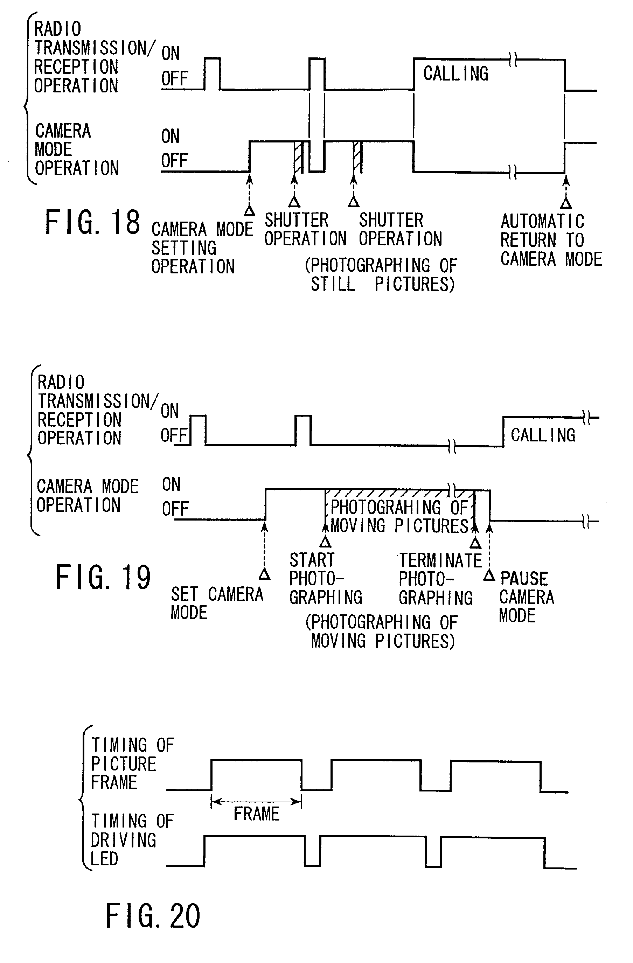

At step 16i, the multimedia processing section 124 encodes the still-picture data generated by the camera 133. The still-picture data, thus encoded, is stored into the memory section 126. If an erasing operation is implemented at the key input section 135, the circuit 121 destroys the still-picture data in the memory 126. The period (shaded) shown in FIG. 18 indicates the photographing of a still picture and the flash emission of light. As FIG. 18 shows, the still-picture photographing is implemented only while the control accompanying the radio transmission/reception operation is not implemented.

When the control of shooting one still picture ends in this manner, the control circuit 121 determines at step 16j whether not the photographing is terminated. When the user implements the operation of ending the camera mode at the key input section 135, the circuit 121 goes to step 16k. At step 16k the circuit 121 suspends the operation of the camera 133 and the LCD 134. Then, the circuit 121 resumes the waiting control after canceling the setting of the camera mode. If the camera mode is not cancelled, the control circuit 121 returns to step 16b and repeatedly implements the still-picture photographing control as is described above.

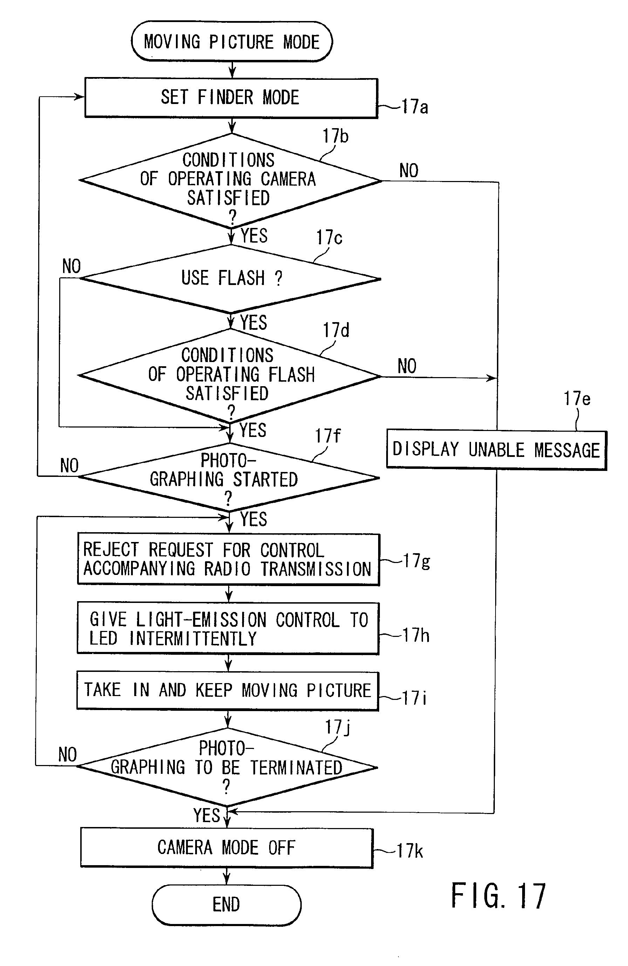

Assume that the user selects the moving-picture taking mode prior to the photographing. The control circuit 121 implements the moving-picture photographing control, as will be described with reference to FIG. 17. FIG. 17 is a flowchart showing the controlling procedure.

As in the still-picture photographing mode described above, the control circuit 121 operates the LCD 134 as a finder at step 17a. At step 17b, the circuit 121 determines whether the condition of operating the camera is met. For example, it determines whether a request has been made for implementing the control mode accompanying the radio transmission/reception, such as the outgoing call or incoming call, the position registration, or the handover.

At step 17c, the control circuit 121 determines whether or not the use of the flash has been selected. If the user has selected the use of the flash, the circuit 121 determines at step 17d whether or not the condition of operating the flash is satisfactory. For example, it determines whether the power remaining in the battery 141 is greater than a predetermined second value. Since the white LED 137 emits light for a longer time in the moving-picture photographing than in the still-picture photographing, the second value is greater than the first predetermined value for the still-picture photographing.

Then, the control circuit 121 repeatedly determines the conditions of operating the camera and the flash until the shooting button is pressed at the key input section 135.

Any one of the operation conditions is found not to be satisfactory as a result of determination of the conditions of operating the camera and the flash. In this case, the control circuit 121 goes step 17e. In step 17e the circuit 121 generates a message indicating that the operation condition is not satisfactory and why it is so, and makes the LCD 134 display the message.

Assume that the user presses the shooting button. The control circuit 121 goes from step 17f to step 17g. At step 17g, the circuit 121 sets a mode for rejecting the implementation of the control mode accompanying the radio transmission/reception operation. The rejecting mode is valid until the photographing is terminated later.. Even if a request is made for the control accompanying the radio transmission/reception, such as the outgoing/incoming calls or position registration/handover during the term is generated, the request is regarded as invalid. The contents of the request may be stored, and the control may be implemented by automatically setting the control mode corresponding to the request after the moving-picture photographing completes.

At step 17h, the control circuit 121 generates a light-emission drive signal intermittently and synchronously with the frame timing of photographing the moving picture if the use of the flash is previously selected. The light-emission drive signal is supplied to the white LED 137 after its voltage is raised from, for example, 4V to 16V in the light-emission drive circuit 127. As the result, the white LED 137 emits light intermittently and synchronously with the frame-photographing timing during the moving-picture photographing. The intermit cycle is extremely short so that it looks as if it emits continuously for the user. FIG. 20 is a diagram showing the relation between the light-emission drive timing and the picture frame timing of the white LED 137.

Meanwhile, the control circuit 121 encodes at step 17i the moving picture data photographed by the camera 133 at the multimedia processing section 124. The circuit 121 stores the picture data into the memory 126. Then, the user represses the photographing button to terminate the moving-picture photographing. At step 17j, the control of photographing the moving picture is continued until the depression of the button is detected. The period (shaded) shown in FIG. 19 indicates the photographing of the moving picture. As shown in FIG. 19, the implementation of the control accompanying the radio transmission operation is rejected during the moving picture shooting term.

When the moving picture shooting during a desired term is ended, the control circuit 121 transits from a step 17j to a step 17k, and suspends the operation of the camera 133 and the LCD 134 here. Then, it returns to the waiting control in accordance with the operation of canceling the setting of the camera mode.

In the third embodiment, the white LED 137 is adopted as a flash light emitting section, and the white LED 137 is emitted in real time by supplying the light-emission drive signal from the control circuit 121. Therefore, continuous light emission is possible. This accomplishes the moving-picture photographing. Moreover, the power required for the light-emission drive can be reduced far more than in the case where a high-luminance light emitting lamp is a xenon lamp. Moreover, the circuit can be miniaturized since the charging/discharging capacitor is unnecessary.

The white LED 137 emits light less intense than the light the xenon lamp or regular light bulb emits. It is therefore usually difficult to effect flash photographing on an object remote (for example, 2m to 5m) from the camera. The LCD 134 for use in the mobile communication terminal is generally small so that an effective photographing distance to the subject is 0.5m to 1.5m if the LCD 134 is used as a finder. Accordingly, it is sufficient for the flash light to travel a distance in this range. Thus, the white LED 137 can work well. If the photographing is extended to 1.5m or more, a small krypton lamp or the like suffices.

In the third embodiment, the request for implementing the control accompanying the radio transmission, such as the outgoing call, incoming call, or the position registration/handover, is monitored both in the still-picture photographing mode and the moving-picture photographing mode. If the request is generated, the control according to the request is implemented by suspending the camera mode for some time. This can prevent the camera operation accompanying the flash light emission and the radio transmission/reception operation from overlapping in time. Thus, power will not be consumed in a large amount in the mobile communication terminal, preventing a decrease in the voltage of the battery 141. Moreover, various sorts of noise generated during the operation of flash-related circuits inside the mobile communication terminal will not interfere with radio transmission/reception waves.

Moreover, even if the request for implementing the control accompanying the radio transmission, such as the outgoing/incoming calls or the position registration/handover, is generated during the moving-picture photographing, the request is regarded as invalid and the moving picture shooting operation is continued by setting a mode for rejecting the control mode accompanying the radio transmission/reception during the moving-picture photographing. Accordingly, the moving-picture photographing and the radio transmission/reception do not overlap with each other. A rapid drop in the voltage of the battery 141 can be avoided.

If the request for the control accompanying the radio transmission, such as the outgoing/incoming calls or the position registration/handover, is generated while the still-picture taking mode and the moving-picture taking mode are set, the photographing mode set is stored. After the control accompanying the radio transmission/reception, the photographing mode is automatically resumed. This makes it unnecessary for the user to set the photographing mode again. Hence, it is easy for the user to operate the mobile communication terminal.

### (Other Embodiments)

In the second embodiment, if a request for the control accompanying the radio transmission, such as the outgoing/incoming calls or the position registration/handover, is generated either in the regular camera mode or the flash mode, the camera mode and the flash mode are once cancelled and the control relating to the radio transmission is implemented. However, if the camera 23 consumes but a small amount of power, the camera operation and the radio transmission/reception can be carried at the same time, except for the period when the terminal remains in the flash mode.

In the embodiments described above, whether or not a request for has been generated for the control accompanying the radio communication is determined at first in the camera mode using the flash. Whether or not the flash operation conditions, such as the battery remaining amount, are satisfied is determined if the implementation request is not generated. If the conditions of the flash operation are satisfied, the charging voltage is applied to the flash circuit 30 or the light-emission drive of the white LED 137.

The present invention is not limited to the embodiments described above. Whether the flash operation conditions are satisfied may be determined at first, and then whether a request for implementing the control accompanying the radio communication is generated is determined if the conditions are satisfied. The flash operation condition is that the power-supply voltage value Vcc of the battery sustains a value that can reliably operate the control circuits 20 and 120 even if the flash circuit 30 is charged or the white LED 137 is driven. If the conditions are not satisfied, the charging voltage will not be applied to the flash circuit 30 or the white LED 137 will not be driven.

In the embodiments described above, the flash circuit 30 is not charged or the white LED 137 is not driven during the radio communication period. Nonetheless, it may be determined whether or not the power-supply voltage Vcc of the battery is higher than the predetermined value, and the flash circuit 30 may be charged or the white LED 137 may be driven during the radio communication if the voltage Vcc is higher than the predetermined value. Further, the charging of the flash circuit 30 or the driving of the white LED 137 during the radio transmission/reception may be suspended only if the voltage Vcc falls below the predetermined value.

The second embodiment may be modified so that, if the incoming call is generated while the flash mode is operating, the user can continue the flash mode or respond to the incoming call notified by a message displayed on the display section 22, the vibration of the terminal, or an sound alarm generated by the terminal. In this case, the user can cancel the flash mode, merely by pressing the hook button (a call button) or the charging button.

The third embodiment may be modified designed so that the white LED 137 emits light for all picture frames as shown in FIG. 20 to photograph a moving picture. If some frames are extracted from the picture data after photographing an object, the white LED 137 is prohibited from emitting light during the periods of generating the frames to be extracted. This lengthens the lifetime of the battery, by preventing wasteful power consumption while the white LED 137 is being driven.

Moreover, the third embodiment is designed so that the white LED 137 emits light intermittently and synchronously with the timing of photographing frames as shown in FIG. 20 to take a moving picture. Nonetheless, the white LED 137 may continuously emits light throughout the moving-picture photographing period. This mitigates the working load of the control section, because the control section need not control the timing of driving the white LED 137. Moreover, the continuous light emission may be performed longer than the moving-picture photographing . This avoids an influences of, for example, light emission delay, whereby a high-quality moving picture with stable luminance can be acquired even immediately after the start of the moving-picture photographing and immediately before the end of the moving-picture photographing.

Moreover, the third embodiment is designed such that, even if a request for the control accompanying the radio transmission operation such as the outgoing/incoming calls or the position registration/handover is generated during the photographing of a moving picture, the request is invalidated and the photographing of moving pictures is continued by setting the mode for rejecting the control mode accompanying the radio transmission/reception. Nevertheless, the photographing of a moving picture may be suspended, and the control accompanying the radio transmission may be performed, if a request is generated for the control accompanying the radio transmission. In this case, it is desired that the moving picture data stored to the memory section 126 be automatically erased immediately before the suspension of the photographing.

Moreover, the respective embodiments are designed so that the user selects the camera mode or the flash mode by performing a manual operation. The present invention is not limited to the embodiments. It may be determined whether the surrounding area is too dark, from the luminance level of the photographing signal generated by the camera. The flash mode is automatically set if the surrounding area is found to be too dark. Further, whether or not the flash must be set may be determined from the level of a signal output by a light-receiving element such as a photodiode or a photo transistor provided outside the camera.

Moreover, the most suitable level for the light-emission drive current may be obtained from the luminance level of the photographing signal that the camera generates in the flash mode before the start of the photographing operation or during the photographing operation. The light-emission drive current is adjusted to the most suitable level and is supplied to the light-emitting element. Driven by the drive current, the light-emitting element emits light in a sufficient amount. Thus, the luminance of the flash light can always be controlled to the most suitable value in accordance with the brightness of the surrounding area. This helps to provide high-quality image data with fixed luminance. Furthermore, the light-emission drive current can be decreased if the surrounding area is bright, thereby to save power and, ultimately, to lengthen the lifetime of the battery.

The present invention can be applied not only to mobile telephones, but also to mobile information terminals (PDAs), portable personal computers, and the like.

In addition, various changes and modifications can be made, without departing from the scope and spirit of the invention, in the shape and structure of the mobile communication terminal, the structure of the flash circuit, the type of the light-emitting element used as the light emitting section, the method of controlling the photographing still pictures and moving pictures, the method of controlling the charging of the flash circuit and its contents, the timing of driving the LED, and the like.

## Claims

1. A mobile communication terminal (MU) comprising:
a radio communication unit (1-8) that performs radio communication;
a camera unit (23);
an electronic flash unit (FU) having a light emitting section (31) and a charging/discharging section (34) which applies a predetermined raised light emission voltage to the light emitting section (31);
a charging unit (26) which charges the charging/discharging section (34) of the electronic flash unit (FU) by applying a charging voltage thereto; and
a control unit; wherein
said control unit (20) including:
first monitoring means for monitoring a request for control accompanying radio communication;
second monitoring means for monitoring a request for application of the charging voltage to the charging/discharging section (34) of said electronic flash unit (FU); and
control means (20b) for controlling, based on results of the monitoring performed by the first and second monitoring means, at least one of the radio communication and the operation of applying the charging voltage to prevent the radio communication and the application of the charging voltage from overlapping in time.

2. The mobile communication terminal according to claim 1, **characterized in that** the electronic flash unit (FU) is removably connected to a housing of the mobile communication terminal (MU) by a connector (25, 30) and receives the charging voltage from the charging unit (26) via the connector (25, 30).

3. The mobile communication terminal according to claim 2, **characterized in that** the connector (25, 30) is an earphone jack (25) provided in the mobile communication terminal (MU).

4. The mobile communication terminal according to claim 1, **characterized in that** the electronic flash unit (FU) is provided in a housing of the radio communication unit (MU) and receives the charging voltage from the charging unit (26) via a feeder line provided in the housing.

5. The mobile communication terminal according to claim 1, **characterized in that** the control means (20b) suspends the application of the charging voltage at least during the implementing the radio communication, in the case where the first monitoring means (20) detects, during the application of the charging voltage, a request for implementing the control accompanying the radio communication.

6. The mobile communication terminal according to claim 1, **characterized in that** the control means (20b) delays the control accompanying the radio communication after the application of the charging voltage, in the case where the first monitoring means (20) detects, during the application of the charging voltage, a request for the control accompanying the radio communication.

7. The mobile communication terminal according to claim 1, **characterized in that** the control means (20b) delays the application of the charging voltage after the radio communication, in the case where the second monitoring means (20) detects a request for the application of the charging voltage during the implementing the radio communication.

8. The mobile communication terminal according to claim 1, **characterized in that** the control means (20b) determines whether an amount of remaining battery or an output voltage value has kept a predetermined value, performs the application of the charging voltage during the radio communication in the case where the amount of remaining battery or output voltage value has kept the predetermined value, and suspends to the application of the charging voltage during the radio communication in the case where the amount of remaining battery or output voltage value is smaller than the predetermined value.

9. A mobile communication terminal comprising:
a camera unit (223);
an electronic flash unit (230) having a light emitting section (231) and a charging/discharging section (233) for applying a predetermined raised light emission voltage to the light emitting section (231); and
a control unit (220); wherein
said control unit (220) including:
monitoring means which monitors a request for a control mode accompanying radio communication, while the mobile communication terminal remains in a camera mode including an operation of applying the charging voltage to the charging/discharging section (233) of the electronic flash unit (FU); and
mode-changing control means for changing an operation mode of the mobile communication terminal from the camera mode to the control mode accompanying the radio communication, in the case where the monitoring means detects a request for the control mode accompanying the radio communication.

10. The mobile communication terminal according to claim 9, **characterized in that** said control unit (220) further including mode-recovering control means for monitoring an end of the control in the control mode after the mode-changing control means changes the operation mode of the mobile communication terminal from the camera mode into the control mode accompanying the radio communication, and for recovering the operation mode of the mobile communication terminal to the camera mode after the end of the controlling operation is detected.

11. A mobile communication terminal comprising:
a radio communication unit (201-208) for performing radio communication;
a camera unit (223);
a light-emitting unit (230); and
a control unit (220); wherein
said control unit (220) including:
first monitoring means for monitoring a request for control accompanying the radio communication;
second monitoring means for monitoring a request for emission of light from the light-emitting unit; and
control means (220b, 220c) for controlling, based on results of the monitoring performed by the first and second monitoring means, at least one of the radio communication and the emission of light to prevent the radio communication and the emission of light from overlapping in time.

12. The mobile communication terminal according to claim 11, **characterized in that** the control means (220b, 220c) suspends the emission of light from the light emitting unit (230) at least during the control accompanying the radio communication, in the case where the first monitoring means detects a request for implementing the control accompanying the radio communication during the driving the light emission of the light emitting unit (230).

13. The mobile communication terminal according to claim 11, **characterized in that** the control means (220b, 220c) starts the control accompanying the radio communication after the driving the light emission of the light emitting unit (230) ends, in the case where the first monitoring means detects a request for implementing the control accompanying the radio communication during the driving the light emission of the light emitting unit (230).

14. The mobile communication terminal according to claim 11, **characterized in that** the control means (220b, 220c) starts the mission of light from the light emitting unit (230) after the control accompanying the radio communication.

15. The mobile communication terminal according to claim 11, **characterized in that** the control means (220b, 220c) determines whether an amount of remaining battery or an output voltage value has reached a predetermined value, performs the emission of light during the radio communication in the case where the amount of remaining battery or output voltage value has reached the predetermined value, and suspends to the emission of light during the radio communication in the case where the amount of remaining battery or output voltage value is smaller than the predetermined value.

16. A mobile communication terminal comprising:
a radio communication unit (201-208) which performs radio communication;
a camera unit (223);
a light emitting unit (230); and
a control unit (220); wherein
said control unit (220) including:
monitoring means for monitoring a request for a control mode accompanying the radio communication while the mobile communication terminal remains in a camera mode having the operation of driving the light emitting unit (230); and
mode-changing control means for changing an operation mode of the mobile communication terminal from the camera mode to the control mode accompanying the radio communication, in the case where the monitoring means detects a request for the control mode accompanying the radio communication.

17. The mobile communication terminal according to claim 16, **characterized in that** said control unit (220) further including mode-recovering control means for monitoring an end of the control performed in the control mode after the mode-changing control means changes the operation mode of the mobile communication terminal from the camera mode into the control mode accompanying the radio communication, and for changing the operation mode of the terminal, form the control mode to the camera mode after the end of the controlling operation is detected.

18. The mobile communication terminal comprising:
a radio communication unit (110) which performs radio communication;
a camera unit (133);
a solid-state light-emitting element (137);
photographing mode setting means (135) for setting a still picture photographing mode or a moving picture photographing mode for the camera unit (133);
first control means (121a, 121c) for supplying a pulse-shaped light-emission drive current to the light-emitting element synchronously with the photographing of still picture, performed by the camera unit (133), and causing the light-emitting element (137) to emit light, in the case where the still picture photographing mode is set by the photographing mode setting means (135); and
second control means (121d) for controlling at least one of the radio communication and the supply of the light-emission current to prevent the radio communication and the supply of light-emission current from overlapping in time.

19. The mobile communication terminal according to claim 18, **characterized by** farther comprising third control means (121c) for determining a suitable light-emission drive current value from a luminance level of a video signal acquired by the camera unit (133) before the first or the second control means supplies the light-emission drive current to the light-emitting element (137).

20. The mobile communication terminal comprising:
a radio communication unit (110) which performs radio communication;
a camera unit (133);
a solid-state light-emitting element (137);
photographing mode setting means (135) for setting a still picture photographing mode or a moving picture photographing mode for the camera unit (133);
first control means (121b, 121c) for supplying a light-emission drive current to the light-emitting element and causing the light-emitting element (137) to emit light, while the terminal remains in the moving picture photographing mode set by the photographing mode setting means (135); and
second control means (121d) for controlling at least one of the radio communication and the supply of the light-emission drive current to prevent the radio communication and the supply of the light-emission drive current from overlapping in time.

21. The mobile communication terminal according to claim 20, **characterized in that** the first control means (121b, 121c) sets a light emission period, including a period of photographing the moving pictures by the camera unit (133), while the moving picture photographing mode remains set by the photographing mode setting means (135), and makes the light-emitting element (137) emit light continuously during the light-emission period thus set.

22. The mobile communication terminal according to claim 20, **characterized in that** the first control means (121b, 121c) makes the light-emitting element (137) emit light intermittently and synchronously with frame timings of moving picture photographing performed by the camera unit (133), while the moving picture photographing mode remains set by the photographing mode setting means (135).

23. The mobile communication terminal according to claim 20, **characterized in that** the first control means (121b, 121c) suspends emission of the light emission from the light-emitting element (137) during periods for photographing unnecessary frames, while the moving picture photographing mode remains set, in order to store into a memory only picture signals representing selected and necessary frames.

24. The mobile communication terminal according to claim 20, **characterized by** farther comprising third control means (121c) for determining a suitable light-emission drive current value from a luminance level of a photographed picture signal acquired by the camera unit (133), before the supply of the light-emission drive current to the light-emitting element (137) or during the supply of the light-emission drive current, or before and during the supply of the light-emission drive current.

25. The mobile communication terminal comprising:
a communication unit (1-8);
a camera unit (23);
a light-emitting unit (31); and
a control unit (20); wherein
said control unit (20) including:
determining means for determining whether a level of power supplied to the communication unit remains at a predetermined level or a level higher than the predetermined level;
monitoring means for monitoring a request for emission of light from the light emitting unit (31); and
light-emission control means for disabling the light emitting unit (31) from emitting light in the case where the monitoring means detects a request for the light-emission, when the level of power supplied to the communication unit is lower than the predetermined level.
